# EUROPEAN PATENT APPLICATION

(11) **EP 4 501 938 A1**
(43) Date of publication of application: **05.02.2025**
(21) Application number: 23780900.9
(22) Date of filing: 30.03.2023
(51) Int. Cl.: C07F 7/18, C08K 5/5419, C08L 83/05, C08L 83/07

(54) **BIS(ALKYNYLOXYSILYL)ALKANE, METHOD FOR PRODUCING SAME, AND CURABLE SILICONE COMPOSITION**

(30) Priority: 31.03.2022 JP 2022060383
(71) Applicant: Dow Toray Co., Ltd., Tokyo 140-8617 (JP)
(72) Inventor: YAMAZAKI, Ryosuke, Ichihara-shi, Chiba 299-0108 (JP); KOMEDA, Yutaka, Ichihara-shi, Chiba 299-0108 (JP); ENDO, Hisayuki, Ichihara-shi, Chiba 299-0108 (JP); MIZUNO, Haruna, Ichihara-shi, Chiba 299-0108 (JP)
(74) Representative: Murgitroyd & Company
(86) International application number: PCT/JP2023/013223
(87) International publication number: WO 2023/190892

(57) **Abstract**

The present invention relates to a bis(alkynyloxysilyl)alkane expressed by the general formula: 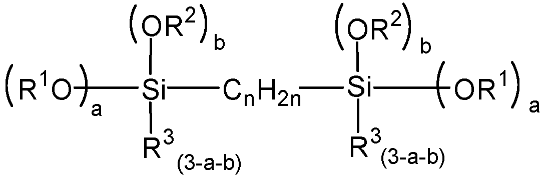 (where R¹ independently represents an alkynyl group having 5 to 12 carbon atoms, R² independently represents an alkyl group having 1 to 3 carbon atoms or a hydrogen atom, R³ independently represents an alkyl group having 1 to 3 carbon atoms, a is independently 1, 2, or 3, b is independently 0, 1, or 2, and a + b is 2 or 3, with the proviso that at least one b is 1 or 2, and n is an integer from 2 to 20) which is effective as a hydrosilylation reaction inhibitor, has a high boiling point, low vapor pressure at room temperature, and has excellent affinity for curable silicone compositions that cure through a hydrosilylation reaction.

## Description

### TECHNICAL FIELD

The present invention relates to bis(alkynyloxysilyl)alkanes, production method thereof, and curable silicone composition containing same.

### BACKGROUND ART

It is well known that acetylene alcohols such as 2-methyl-3-butyn-2-ol, 3,5-dimethyl-1-hexyn-3-ol, 1-ethynyl-cyclohexan-1-ol, and the like are blended with a curable silicone composition that is cured via a hydrosilylation reaction between a monovalent hydrocarbon group having an aliphatic unsaturated bond and a silicon-bonded hydrogen atom in order to control the curability of the composition. It is also well known that a silane compound obtained by silylating the acetylene alcohol (Patent Documents 1 to 3) or an organosiloxane obtained by siloxylating the acetylene alcohol (Patent Documents 4 and 5) can be blended in order to sufficiently suppress the hydrosilylation reaction during storage of the composition and to rapidly cure the composition by heating.

However, curable silicone compositions containing either these silane compounds obtained by silylating acetylene alcohol or organosiloxanes obtained by siloxylating acetylene alcohol have problems such as poor compatibility with the curable silicone composition, that the cured product turns yellow, and that uniform curing may not occur depending on the heating conditions, specifically, the heating temperature, whether or not reduced pressure is used during heating, hot air circulation, and the like.

On the other hand, Patent Document 6 discloses a bis(alkynyloxysilyl)alkane, and Patent Document 7 discloses a curable silicone composition containing this compound. However, Patent Documents 6 and 7 make no mention nor suggestion of bis(alkynyloxysilyl)alkanes further having an alkoxy group or hydroxyl group (silanol group) bonded to a silicon atom.

### RELATED ART DOCUMENTS

### Patent Documents

Patent Document 1: Japanese Unexamined Patent Application Publication S59-133252
Patent Document 2: Japanese Unexamined Patent Application Publication S61-000261
Patent Document 3: Japanese Unexamined Patent Application Publication S64-011160
Patent Document 4: Japanese Unexamined Patent Application Publication S52-093468
Patent Document 5: Japanese Unexamined Patent Application Publication S64-051466
Patent Document 6: Japanese Unexamined Patent Application Publication H4-036292
Patent Document 7: Japanese Unexamined Patent Application Publication H4-161459

### SUMMARY OF THE INVENTION

### PROBLEM TO BE SOLVED BY THE INVENTION

An object of the present invention is to provide a novel compound which has alkynyloxysilyl groups at both ends of the alkane and further has an alkoxy group or a hydroxyl group (silanol group) bonded to a silicon atom, which is effective as an inhibitor of hydrosilylation reactions, has a high boiling point, a low vapor pressure at room temperature, and has excellent affinity for curable silicone compositions that cure through a hydrosilylation reaction. Furthermore, another object of the present invention is to provide a curable silicone composition that exhibits uniform curability regardless of the heating conditions.

### MEANS FOR SOLVING THE PROBLEM

The bis(alkynyloxysilyl)alkane of the present invention is expressed by the general formula: 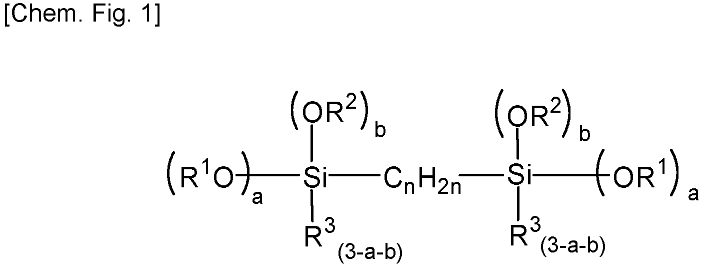 (where R¹ independently represents an alkynyl group having 5 to 12 carbon atoms, R² independently represents an alkyl group having 1 to 3 carbon atoms or a hydrogen atom, R³ independently represents an alkyl group having 1 to 3 carbon atoms, "a" independently represents 1, 2, or 3, "b" independently represents 0, 1, or 2, and "a + b" is 2 or 3, where at least one of "b" is 1 or 2, and "n" represents an integer from 2 to 20).

In the formula R¹ preferably represents an alkynyl group expressed by the formula: 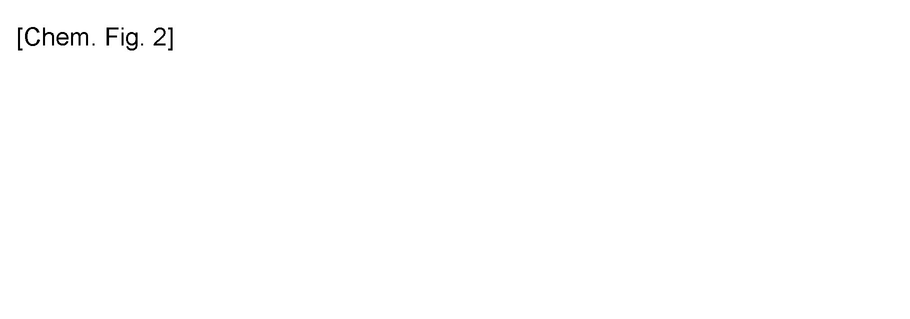 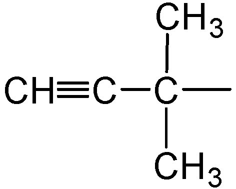 an alkynyl group expressed by the formula: 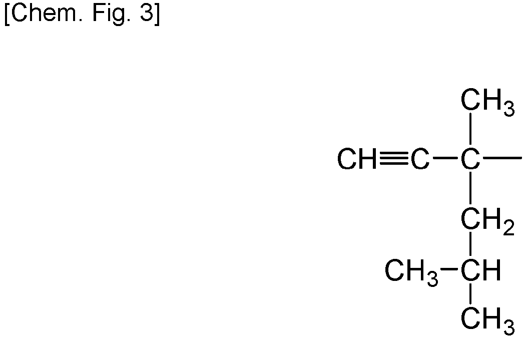 or an alkynyl group expressed by the formula: 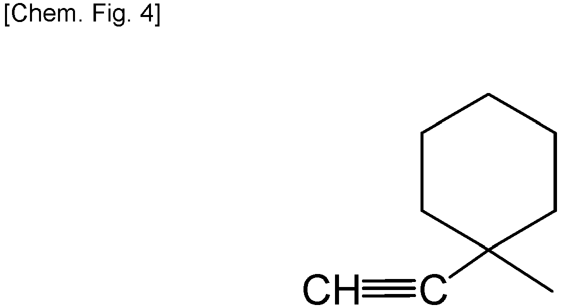 Furthermore, the production method for the bis(alkynyloxysilyl)alkane of the present invention includes the steps of:
performing a dehalogenation hydrogen condensation reaction of a bis(halosilyl)alkane expressed by general formula: 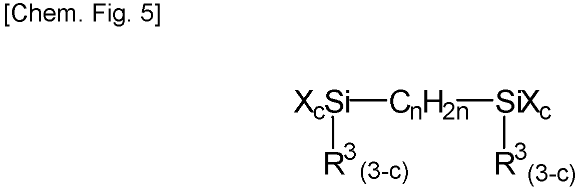
(where, R³ is independently an alkyl group having 1 to 3 carbon atoms, X is independently a halogen atom, c is independently 2 or 3, and n is an integer of 2 to 20.), and
an alkynyl alcohol expressed by the formula:

   R¹OH

   (where, R¹ is an alkynyl group having 5 to 12 carbon atoms.), and then reacting the resulting partial condensation reaction product with water or an alkyl alcohol having 1 to 3 carbon atoms.

In the above method, the alkynyl alcohol is preferably an alkynyl alcohol expressed by the formula: 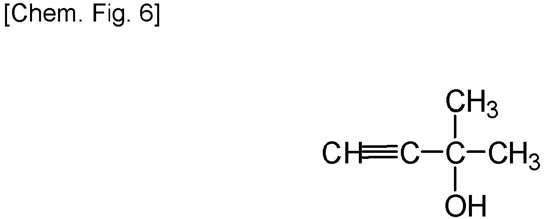 an alkynyl alcohol expressed by the formula: 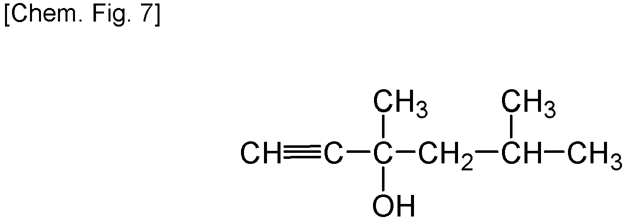 or an alkynyl alcohol expressed by the formula:

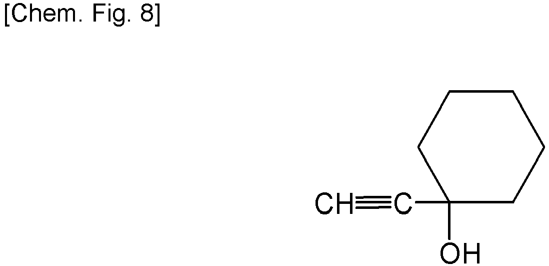

Furthermore, in the method of production, the dehydrohalogenation condensation reaction is preferably carried out in the presence of a hydrogen halide scavenger, preferably triethylamine, pyridine, picoline, or diazabicycloundecene.

The bis(alkynyloxysilyl)alkane of the present invention is suitable as a hydrosilylation reaction inhibitor.

The curable silicone composition of the present invention contains the aforementioned bis(alkynyloxysilyl)alkane, and specifically contains at least:
(A) an organopolysiloxane having at least two alkenyl groups in one molecule; (B) an organohydrogenpolysiloxane having at least two silicon-bonded hydrogen atoms in each molecule;
(C) the bis(alkynyloxysilyl)alkane described above, and
(D) a hydrosilylation reaction catalyst.

### EFFECT OF THE INVENTION

The bis(alkynyloxysilyl)alkane of the present invention has alkynyloxysilyl groups at both ends of the alkane, and also has an alkoxy group or a hydroxyl group (silanol group) bonded to a silicon atom, and is effective as an inhibitor of hydrosilylation reactions, has a high boiling point, a low vapor pressure at room temperature, and has excellent affinity for curable silicone compositions that cure through a hydrosilylation reaction. Furthermore, the curable silicone composition of the present invention exhibits uniform curability regardless of the heating conditions.

### BRIEF DESCRIPTION OF THE DRAWINGS

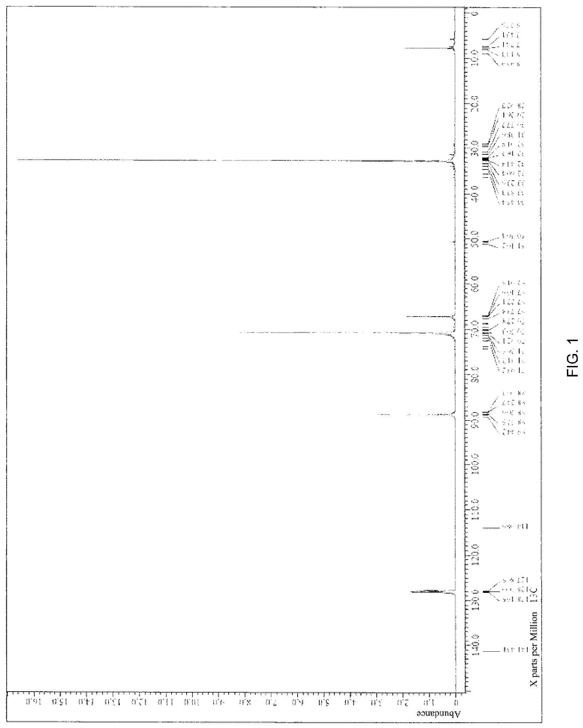

FIG. 1 is a ¹³C-NMR chart of the bis(alkynyloxysilyl)alkane prepared in Example 1.

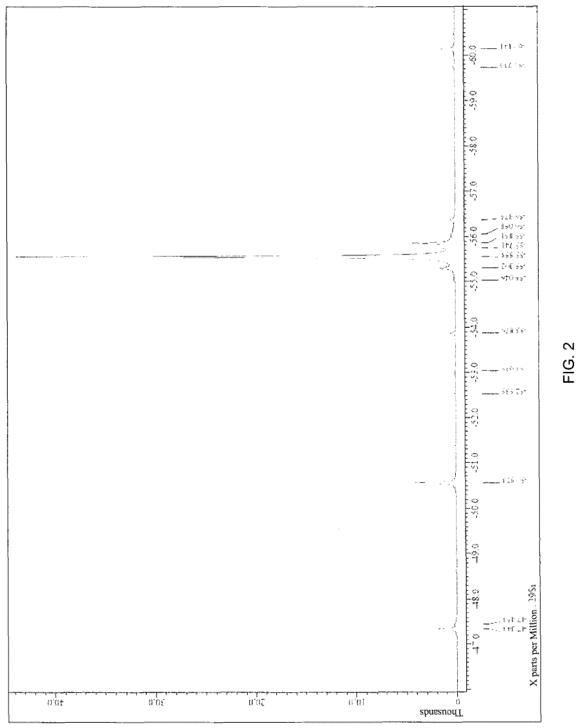

FIG. 2 is a ²⁹Si-NMR chart of the bis(alkynyloxysilyl)alkane prepared in Example 1.

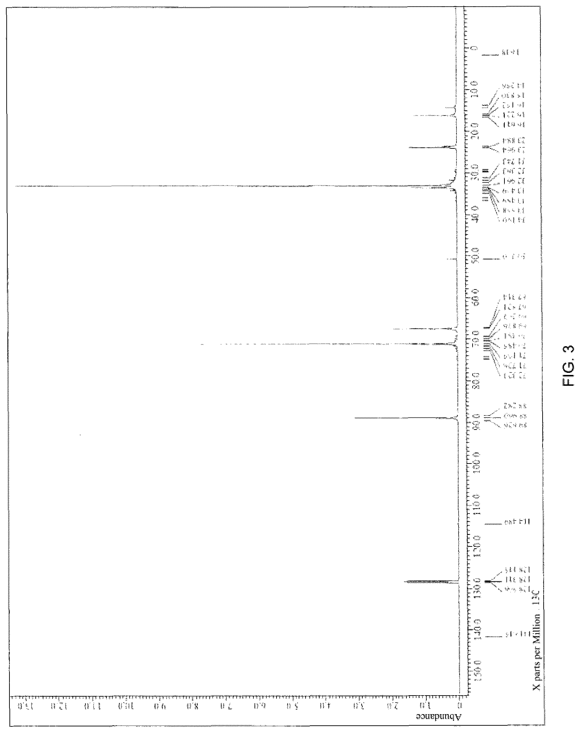

FIG. 3 is a ¹³C-NMR chart of the bis(alkynyloxysilyl)alkane prepared in Example 2.

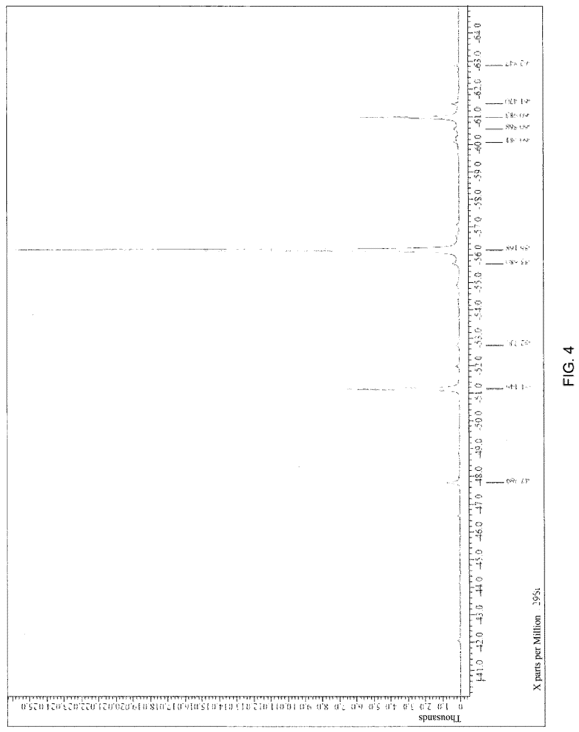

FIG. 4 is a ²⁹Si-NMR chart of the bis(alkynyloxysilyl)alkane prepared in Example 2.

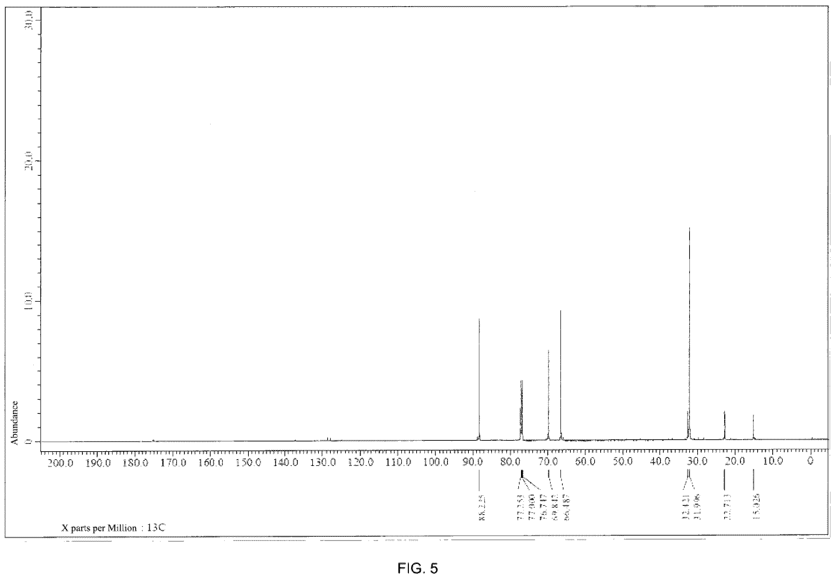

FIG. 5 is a ¹³C-NMR chart of the bis(alkynyloxysilyl)alkane prepared in Example 3.

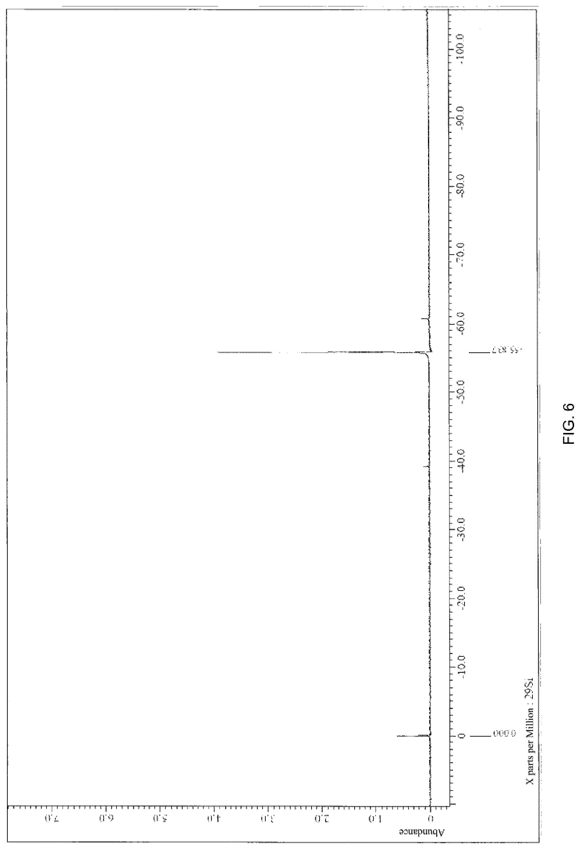

FIG. 6 is a ²⁹Si-NMR chart of the bis(alkynyloxysilyl)alkane prepared in Example 3.

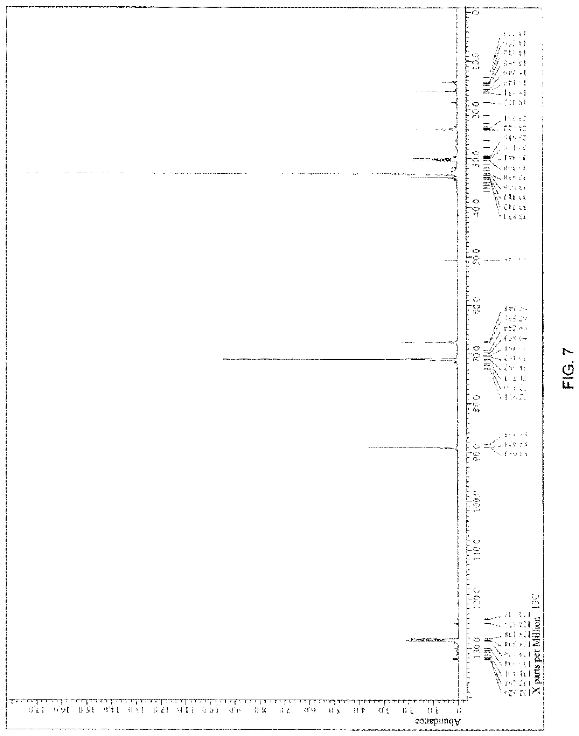

FIG. 7 is a ¹³C-NMR chart of the bis(alkynyloxysilyl)alkane prepared in Example 4.

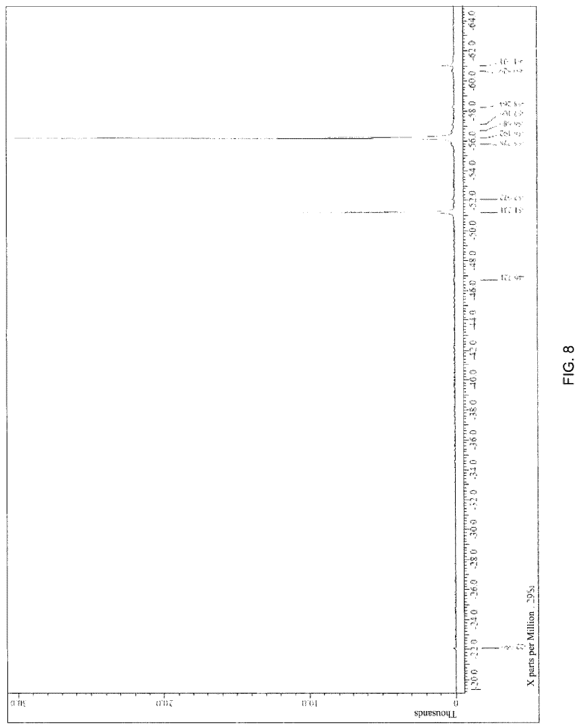

FIG. 8 is a ²⁹Si-NMR chart of the bis(alkynyloxysilyl)alkane prepared in Example 4.

### DESCRIPTION OF THE PREFERRED EMBODIMENTS

### <Bis(alkynyloxysilyl)alkane>

First, the bis(alkynyloxysilyl)alkane of the present invention will be described in detail.

The bis(alkynyloxysilyl)alkane of the present invention is expressed by the general formula:

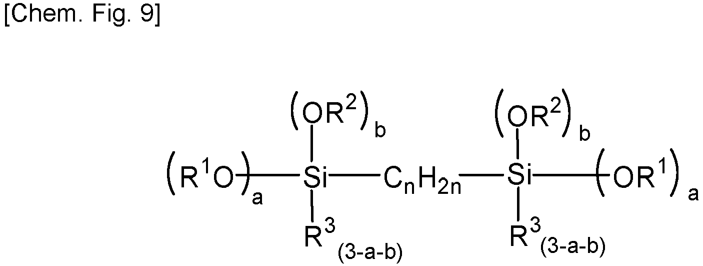

In the formula, R¹ is independently an alkynyl group having 5 to 12 carbon atoms, a linear or branched alkynyl group expressed by the formula: CₘH₂ₘ₋₃ (in the formula, m is an integer of 5 to 12), or an alkynyl group having a cyclic structure expressed by the formula: CₘH₂ₘ₋₅ (wherein m is the same as defined above), and is preferably a branched alkynyl group or an alkynyl group having a cyclic structure.

Specifically, if R¹ is a branched alkynyl group expressed by the formula: 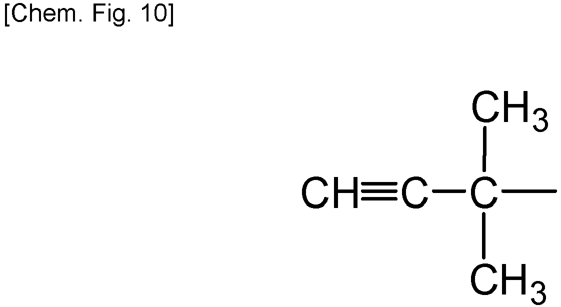 the bis(alkynyloxysilyl)alkane of the present invention is expressed by the general formula:

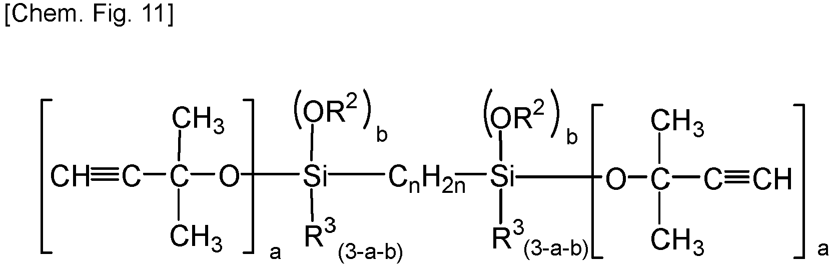

Furthermore, if R¹ is a branched alkynyl group expressed by the formula: 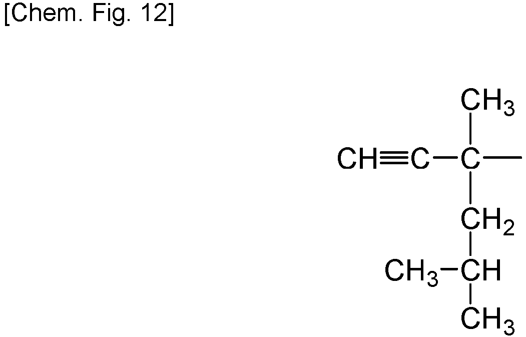 the bis(alkynyloxysilyl)alkane of the present invention is expressed by the general formula:

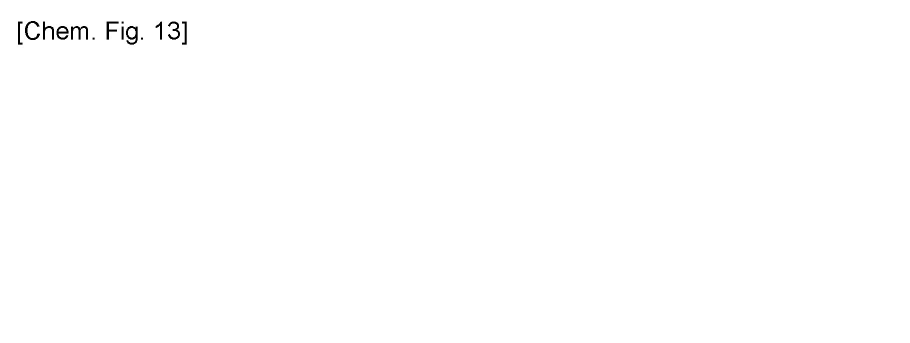

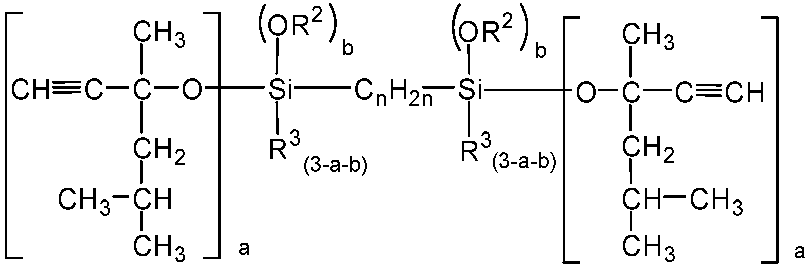

Furthermore, if R¹ is a branched alkynyl group expressed by the formula: 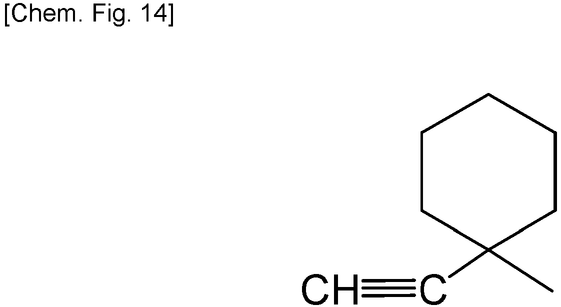 the bis(alkynyloxysilyl)alkane of the present invention is expressed by the general formula:

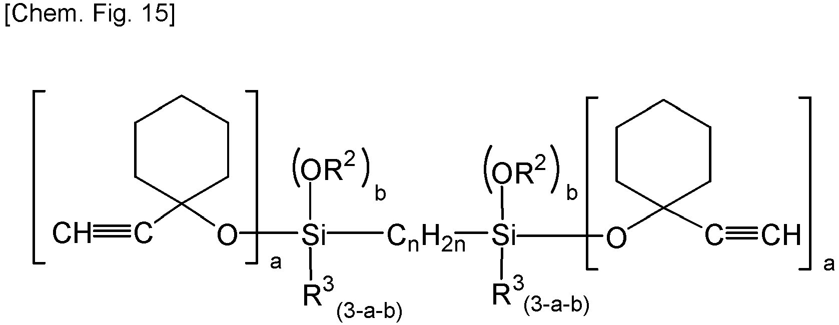

Furthermore, in the above formula, R² is independently an alkyl group having 1 to 3 carbon atoms or a hydrogen atom, and examples of the alkyl group of R² include methyl groups, ethyl groups, and propyl groups, and methyl groups are preferable.

Furthermore, in the above formula, R³ is independently an alkyl group having 1 to 3 carbon atoms, such as a methyl group, an ethyl group, or a propyl group, and is preferably a methyl group.

Furthermore, in the above formula, a is independently 1, 2, or 3, indicating the number of alkynyloxy groups bonded to silicon atoms at the molecular chain terminals. Furthermore, in the above formula, b is independently 0, 1, or 2, indicating the number of alkoxy groups or hydroxyl groups (silanol groups) bonded to silicon atoms at the molecular chain terminals. In the above formula, a+b is 2 or 3, and at least one b is 1 or 2. This is because the bis(alkynyloxysilyl)alkane of the present invention has at least one or two silicon-bonded alkoxy groups or hydroxyl groups (silanol groups) at the terminals of the molecular chain, and when this is added to a curable silicone composition, the adhesive properties of the composition are improved. Furthermore, the bis(alkynyloxysilyl)alkane of the present invention is suitable as a hydrosilylation reaction inhibitor in a hydrosilylation reaction-type curable silicone composition, and therefore preferably contains at least four alkynyloxy groups in one molecule.

Furthermore, in the above formula, n is an integer of 2 to 20, and preferably an integer of 6 to 20, or an integer of 6 to 10. This is because if the value of n is at or above the lower limit of the above range, the transparency of the composition will be improved when the compound is blended into a silicone composition. On the other hand, if the value of n is at or below the upper limit of the above range, the hydrosilylation reaction can be sufficiently suppressed even when this compound is blended in a small amount into a hydrosilylation reaction-curable silicone composition.

Examples of the bis(alkynyloxysilyl)alkane of the present invention include compounds expressed by the following formulas:

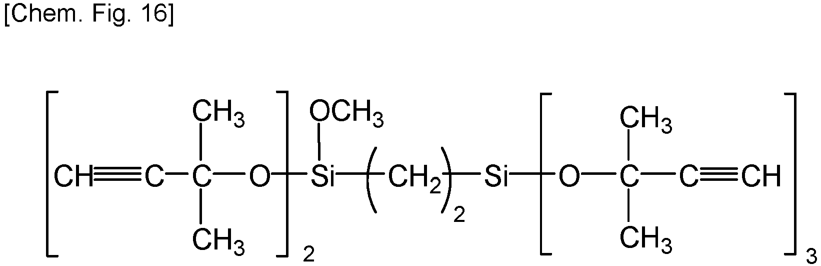

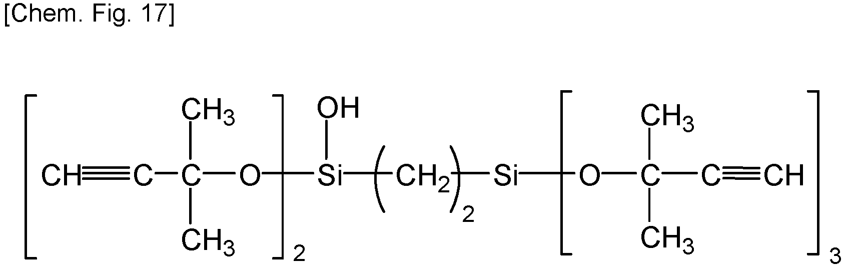

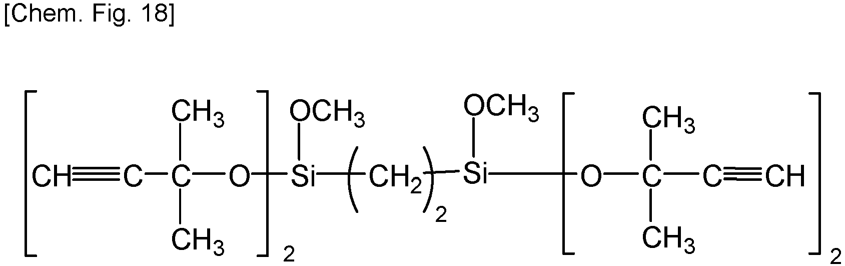

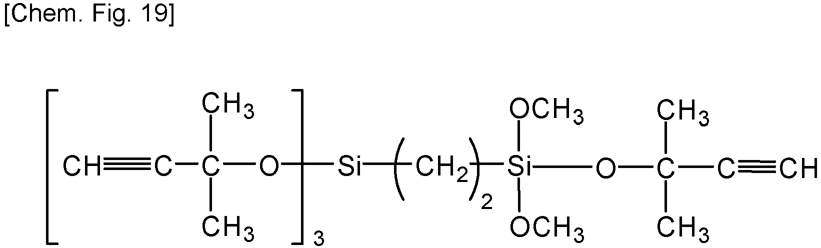

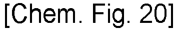

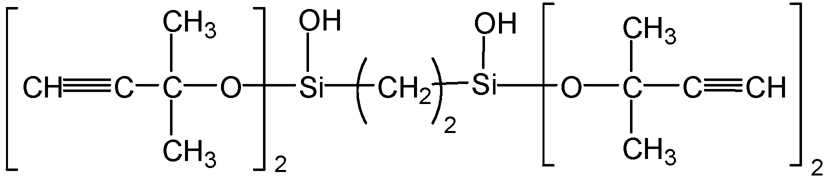

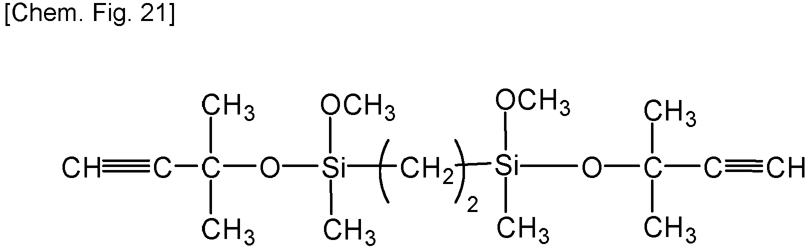

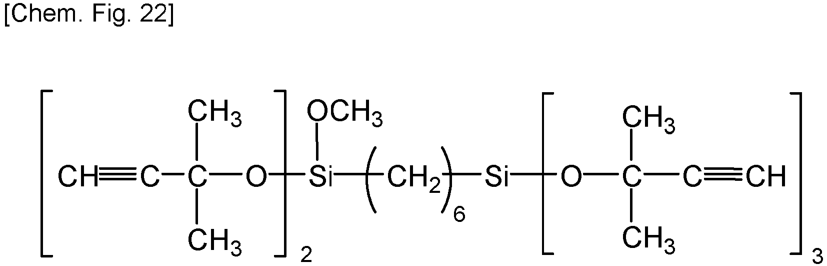

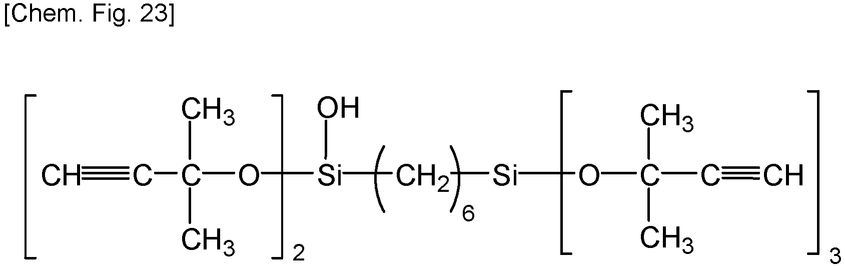

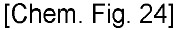

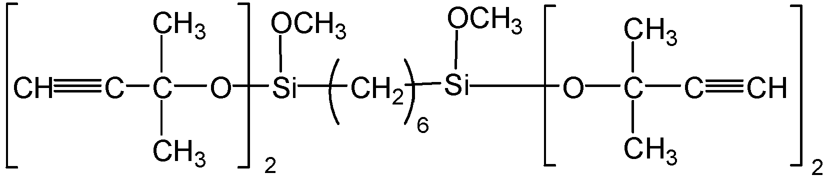

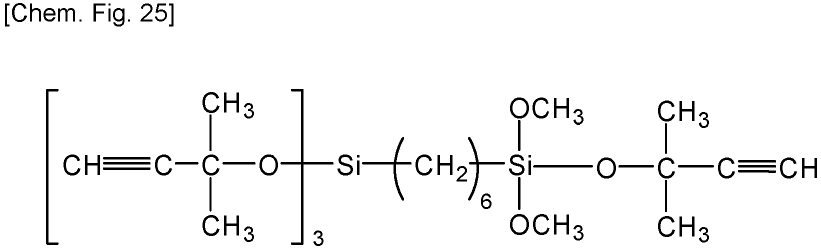

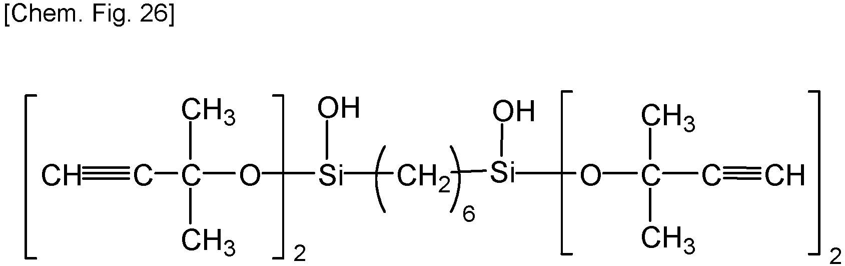

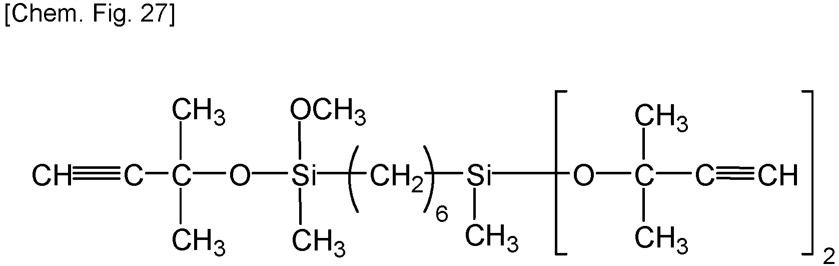

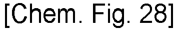

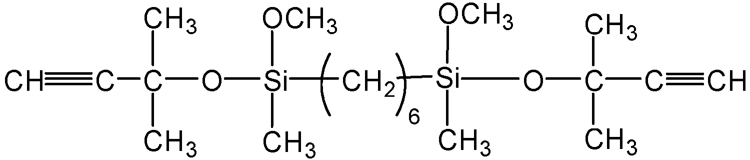

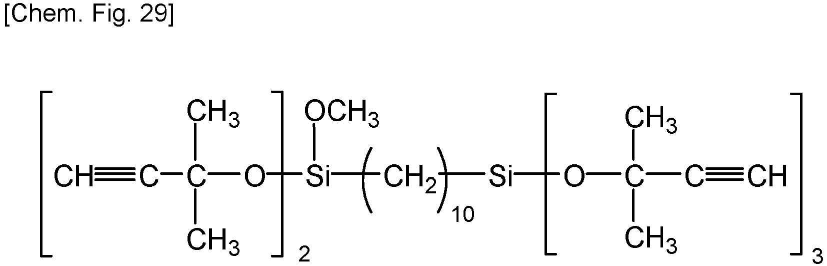

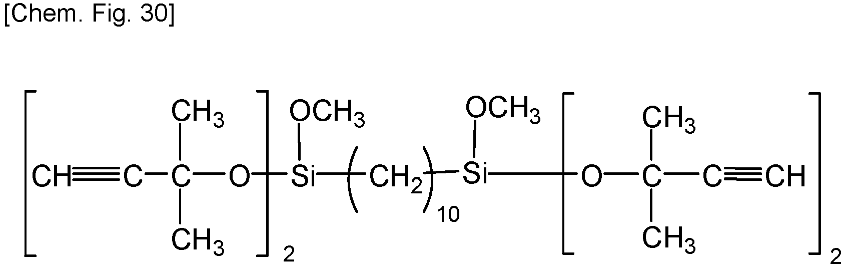

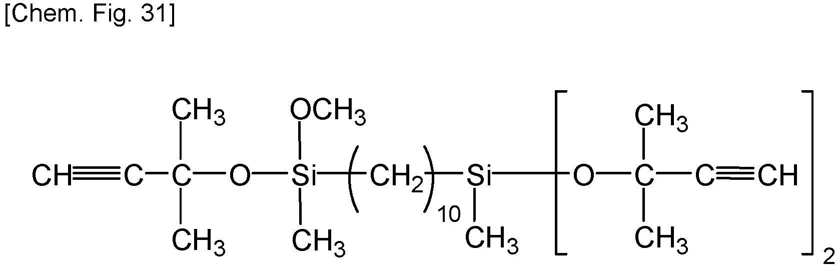

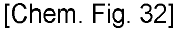

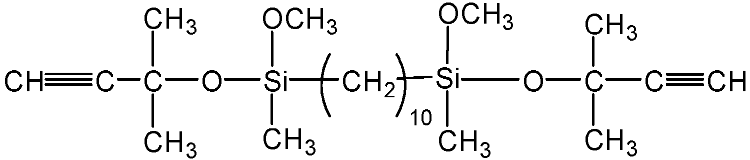

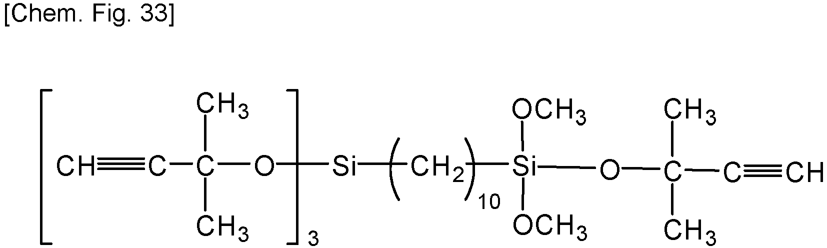

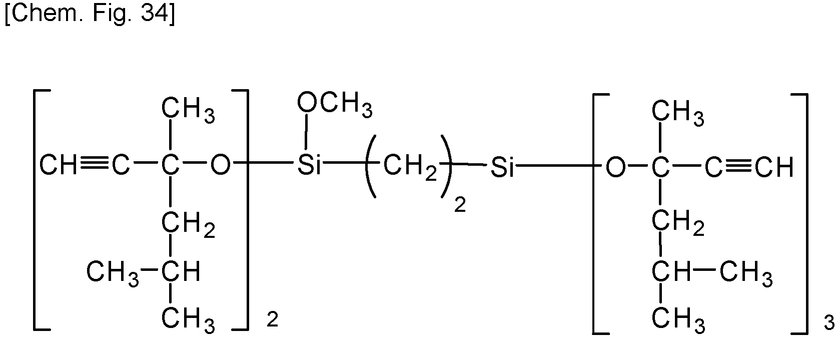

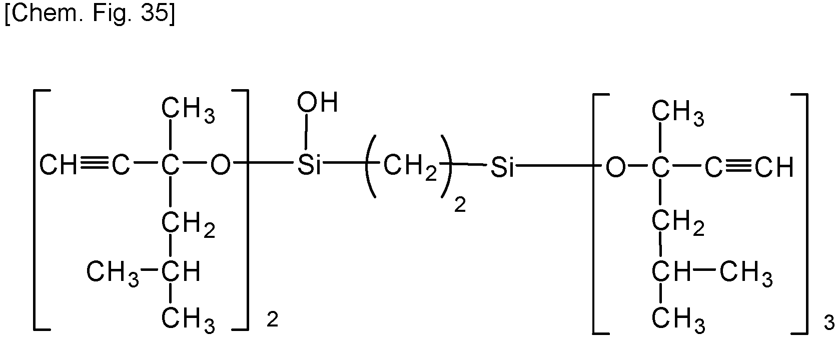

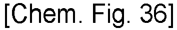

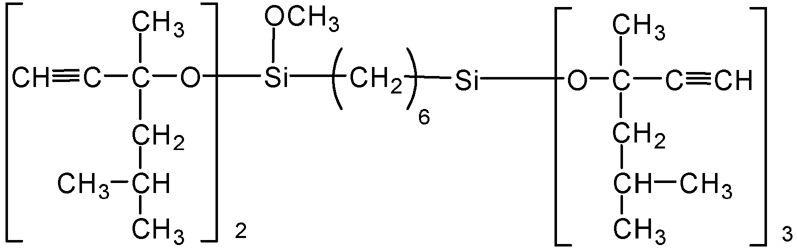

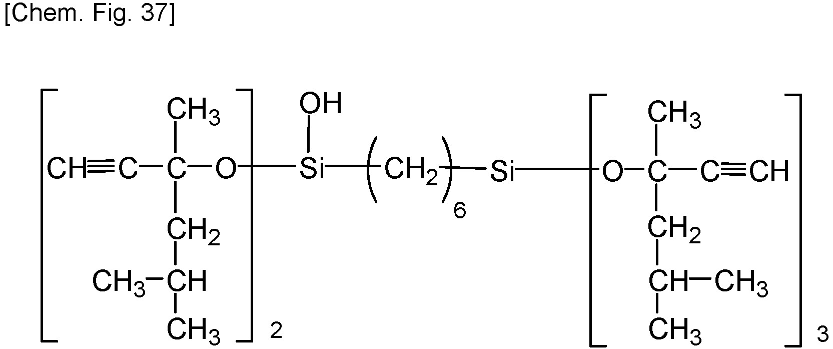

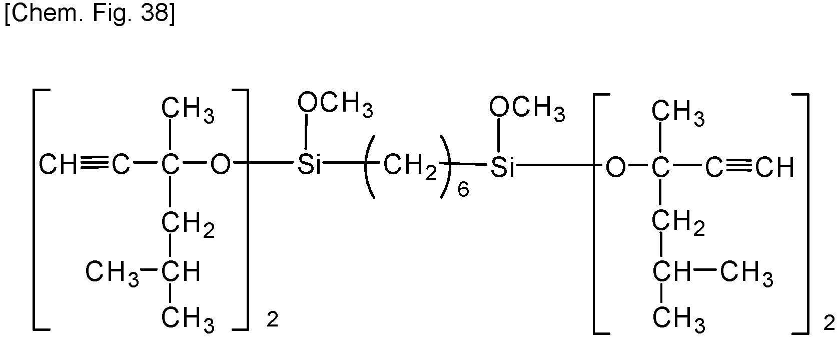

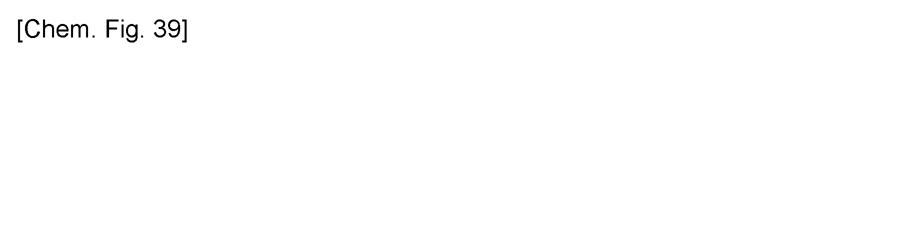

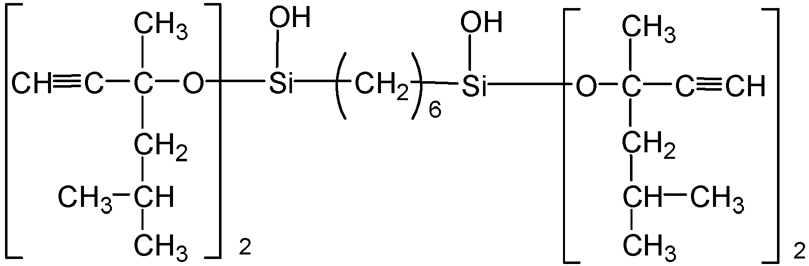

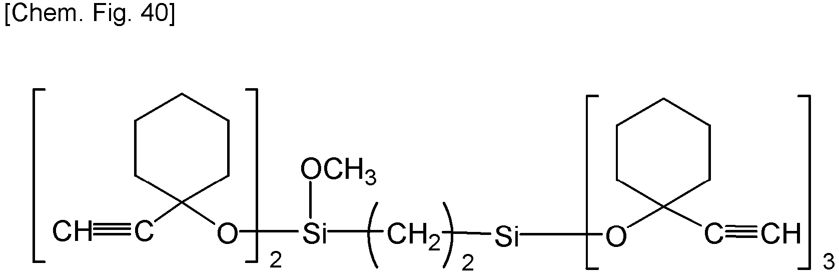

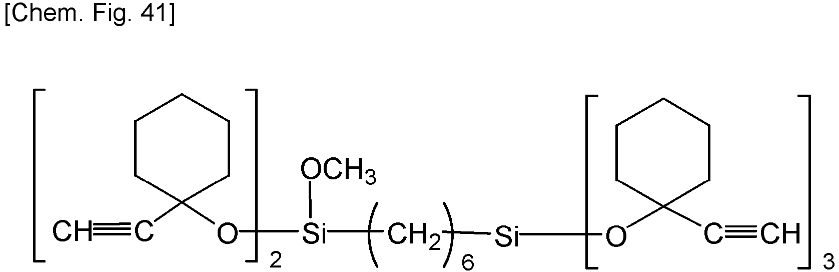

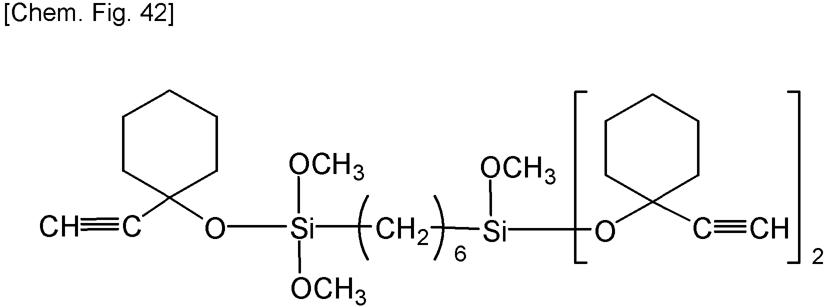

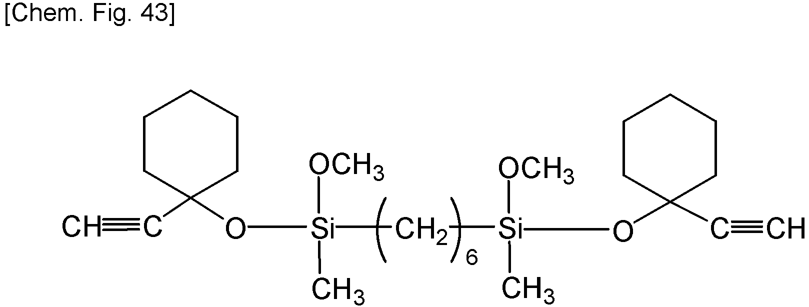

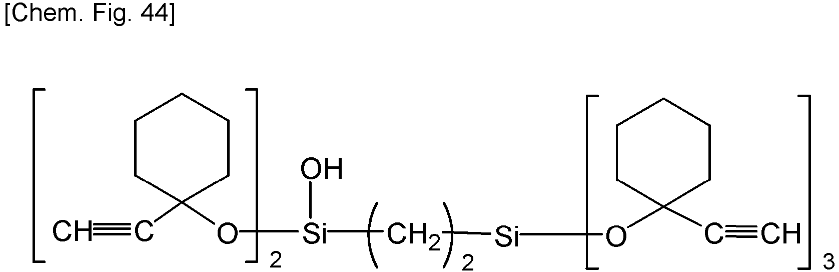

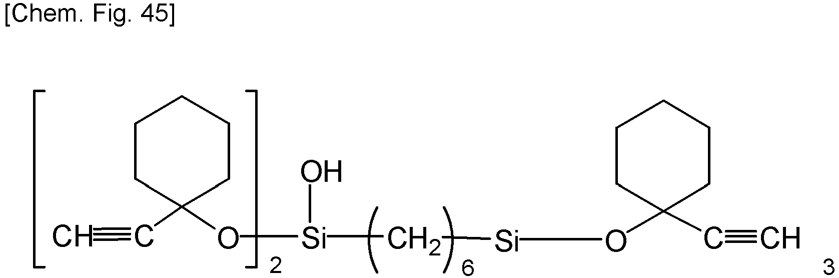

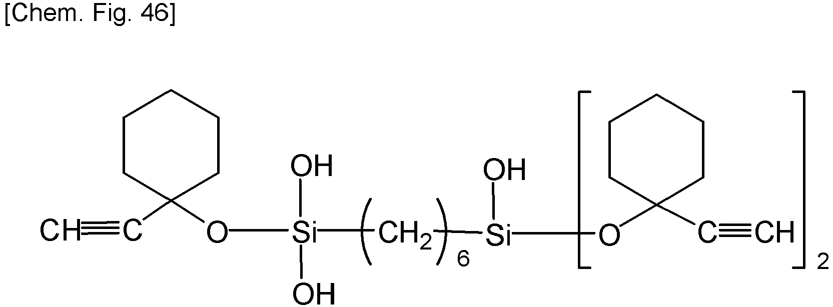

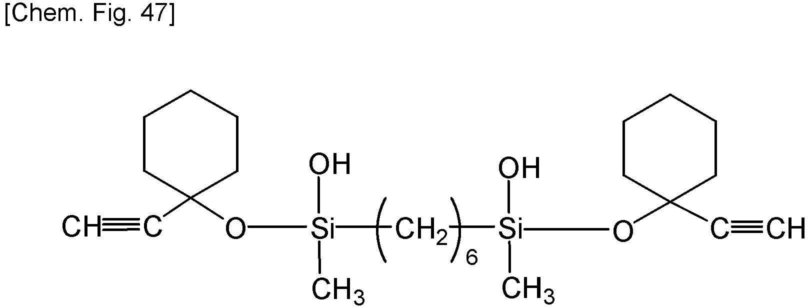

### <Production method for bis(alkynyloxysilyl)alkane>

Next, the production method for a bis(alkynyloxysilyl)alkane of the present invention will be described in detail.

The production method of the present invention includes subjecting a bis(halosilyl)alkane expressed by the general formula: 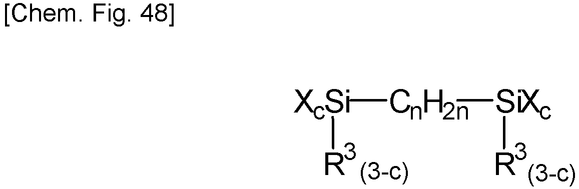 to a dehydrohalogenation condensation reaction with an alkynyl alcohol expressed by the formula:

R1OH

and then reacting the condensation reaction product with water or an alkyl alcohol having 1 to 3 carbon atoms.

In the above bis(halosilyl)alkane, R³ in the above formula is independently an alkyl group having 1 to 3 carbon atoms, such as a methyl group, an ethyl group, or a propyl group, and is preferably a methyl group.

In the above bis(halosilyl)alkane, X in the above formula is independently a halogen atom, such as a chlorine atom, a bromine atom, or an iodine atom, and is preferably a chlorine atom.

Furthermore, in the above formula, c is independently 2 or 3, and is preferably 3.

Furthermore, in the above formula, n is an integer of 2 to 20, and preferably an integer of 6 to 20, or an integer of 6 to 10. This is because, if the value of n is at least the lower limit of the above range, the transparency of the composition will be enhanced when the resulting bis(alkynyloxysilyl)alkane is blended into a silicone composition. On the other hand, if the value of n is at most the upper limit of the above range, the hydrosilylation reaction can be sufficiently suppressed even if only a small amount of the resulting bis(alkynyloxysilyl)alkane is blended into the hydrosilylation reaction-curable silicone composition.

The bis(halosilyl)alkane can be prepared, for example, by a method of a hydrosilylation reaction of a halosilane represented by the general formula:

HSiX_{c}R³_{(3-c)}

(where, R³ is an alkyl group having 1 to 3 carbon atoms, X is a halogen atom, and c is 2 or 3)
with a halosilane expressed by the general formula:

   SiX_{c}R³_{(3-c)}(CH₂)_{n"}-CH=CH₂

   (where R³ is an alkyl group having 1 to 3 carbon atoms, X is a halogen atom, c is 2 or 3, and n" is an integer from 0 to 18.),
   or by a method of a hydrosilylation reaction of a diene compound expressed by the general formula:

      CH₂=CH-(CH₂)_{n'}-CH=CH₂

      (where n' is an integer from 1 to 16)
      with a halosilane expressed by the general formula:

         HSiX_{c}R³_{(3-c)}

         (where R³ is an alkyl group having 1 to 3 carbon atoms, X is a halogen atom, and c is 2 or 3),
         as disclosed in Japanese Unexamined Patent Application Publication 2006-117532 (corresponding to the specification of U.S. Pat. No. 7,456,307).
         It should be noted that in the above formula, R³ and X are the same as defined above.

In addition, in the above alkynyl alcohol, R¹ in the formula is an alkynyl group having 5 to 12 carbon atoms, and examples include linear or branched alkynyl alcohols expressed by the formula: CₘH₂ₘ₋₃OH (where m is an integer of 5 to 12), or alkynyl alcohols having a cyclic structure expressed by the formula: CₘH₂ₘ₋₅OH (where m is the same as defined above), and preferably is a branched alkynyl alcohol or alkynyl alcohol having a cyclic structure.

Specifically, examples of the alkynyl alcohol include branched alkynyl alcohols expressed by the formula: 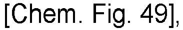 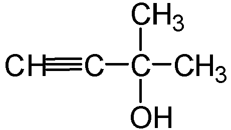 branched alkynyl alcohols expressed by the formula: 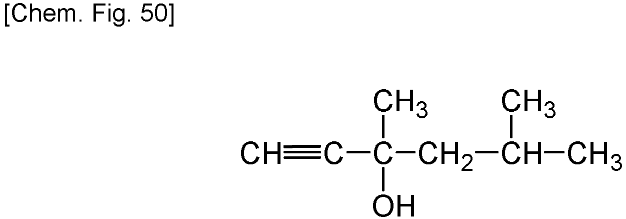 and alkynyl alcohols having a cyclic structure expressed by the formula:

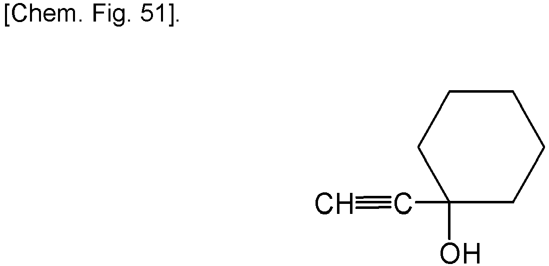

In the production method of the present invention, the bis(alkynyloxysilyl)alkane of the present invention can be prepared by subjecting a bis(halosilyl)alkane and an alkynyl alcohol to a dehydrohalogenation condensation reaction. The amount of alkynyl alcohol added to the bis(halosilyl)alkane is preferably such that 1.0 to 5.0 moles, and more preferably 1.0 to 2.0 moles, of alkynyl alcohol are added per mole of halogen atoms bonded to silicon atoms in the bis(halosilyl)alkane.

The dehydrohalogenation condensation reaction is preferably carried out in the presence of a hydrogen halide scavenger, preferably triethylamine, pyridine, picoline, or diazabicycloundecene. The amount of the hydrogen halide scavenger is preferably 1.0 to 5.0 moles, more preferably 1.0 to 2.5 moles, per mole of halogen atoms bonded to silicon atoms in the bis(halosilyl)alkane.

The dehydrohalogenation condensation reaction is preferably carried out by adding the bis(halosilyl)alkane dropwise to a reaction vessel containing the alkynyl alcohol and the hydrogen halide promoter. It should be noted that although the dehydrohalogenation reaction proceeds at room temperature, the reaction is preferably performed at the reflux temperature of the alkyl alcohol for 3 hours or longer.

In the production method of the present invention, the partial condensation reaction product obtained by the above dehydrohalogenation condensation reaction may be reacted with water or an alkyl alcohol having 1 to 3 carbon atoms to replace the silicon-bonded halogen atoms remaining in the condensation reaction product with hydroxyl groups (silanol groups) or alkoxy groups, thereby preparing the bis(alkynyloxysilyl)alkane of the present invention. Examples of the alkyl alcohol include methanol, ethanol, and propanol, but methanol is preferable.

The bis(alkynyloxysilyl)alkane obtained by the production method of the present invention can be obtained as a mixture of bis(alkynyloxysilyl)alkane (1) expressed by the general formula: 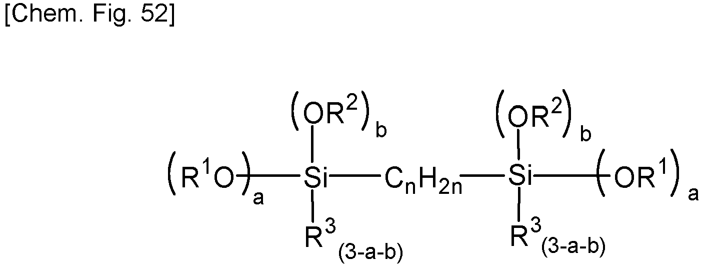 and bis(alkynyloxysilyl)alkane (2) expressed by the general formula: 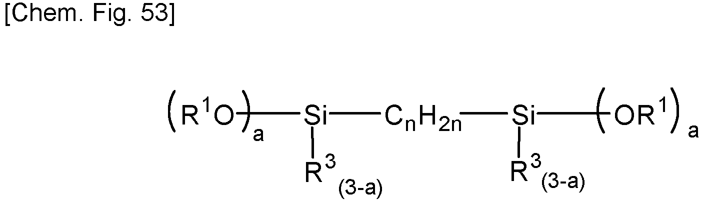 The proportion of the bis(alkynyloxysilyl)alkane (1) in the mixture is not limited, but is preferably 1% or more, 5% or more, 10% or more, or 20% or more as determined by the area percentage method using an analysis chart for gas chromatography (hereinafter referred to as GC analysis chart).

### <Curable Silicone Composition>

Next, the curable silicone composition of the present invention will be described in detail.

The bis(alkynyloxysilyl)alkane of the present invention is useful as a hydrosilylation reaction inhibitor, and therefore the curable silicone composition of the present invention is a hydrosilylation reaction-curable type and contains the aforementioned bis(alkynyloxysilyl)alkane. Specifically, the composition contains:
(A) an organopolysiloxane having at least two alkenyl groups in one molecule;
(B) an organohydrogenpolysiloxane having at least two silicon-bonded hydrogen atoms in each molecule;
(C) the bis(alkynyloxysilyl)alkane described above; and
(D) a hydrosilylation reaction catalyst.

Component (A) is an organopolysiloxane having at least two alkenyl groups per molecule. Examples of the alkenyl groups in component (A) include vinyl groups, allyl groups, butenyl groups, pentenyl groups, hexenyl groups, heptenyl groups, octenyl groups, and other alkenyl groups having 2 to 12 carbon atoms. However, vinyl groups, allyl groups, and hexenyl groups are preferred. Examples of groups bonded to the silicon atom other than alkenyl groups in component (A) include alkyl groups having 1 to 12 carbon atoms such as methyl groups, ethyl groups, propyl groups, butyl groups, pentyl groups, hexyl groups, heptyl groups, and the like; aryl groups having 6 to 12 carbon atoms such as phenyl groups, tolyl groups, xylyl groups, and the like; and aralkyl groups having 7 to 12 carbon atoms, such as benzyl groups, phenethyl groups, and the like, but methyl groups are preferable. Furthermore, component (A) may have small amounts of hydroxyl groups or alkoxy groups having 1 to 3 carbon atoms, such as methoxy groups and ethoxy groups, bonded to silicon atoms, so long as the object of the present invention is not impaired.

There are no limitations on the molecular structure of component (A), and examples include linear, partially branched, branched, cyclic, and resinous. Examples of this component (A) include dimethylpolysiloxanes capped at both molecular terminals with dimethylvinylsiloxy groups, copolymers of dimethylsiloxane and methylvinylsiloxane capped at both molecular terminals with trimethylsiloxy groups, copolymers of dimethylsiloxane and methylvinylsiloxane copolymer capped at both molecular terminals with dimethylvinylsiloxy groups, dimethylpolysiloxane capped at both molecular terminals with dimethylhydrogensiloxy groups, methylvinylpolysiloxane capped at both molecular terminals with trimethylsiloxy groups, cyclic methylvinylpolysiloxane, cyclic methylvinylsiloxane-dimethylsiloxane copolymer, copolymers containing a siloxane unit expressed by the formula: (CH₂=CH)(CH₃)₂SiO_{1/2} and a siloxane unit expressed by the formula: SiO_{4/2}, copolymers containing a siloxane unit expressed by the formula: (CH₂=CH)(CH₃)₂SiO_{1/2} and a siloxane unit expressed by the formula: CH₃SiO_{3/2}, copolymers containing a siloxane unit expressed by the formula: (CH₂=CH)(CH₃)₂SiO_{1/2} and a siloxane unit expressed by the formula: C₆H₅SiO_{3/2}, copolymers containing a siloxane unit expressed by the formula: (CH₃)₃SiO_{1/2}, a siloxane unit expressed by the formula: (CH₂=CH)(CH₃)₂SiO_{1/2}, and a siloxane unit expressed by the formula: SiO_{4/2}, copolymers containing a siloxane unit expressed by the formula: (CH₃)₃SiO_{1/2}, a siloxane unit expressed by the formula: (CH₂=CH)(CH₃)₂SiO_{1/2}, and a siloxane unit expressed by the formula: CH₃SiO_{3/2}, and copolymers containing a siloxane unit expressed by the formula: (CH₃)₃SiO_{1/2}, a siloxane unit expressed by the formula: (CH₂=CH)(CH₃)₂SiO_{1/2}, and a siloxane unit expressed by the formula: C₆H₅SiO_{3/2}.

Component (B) is a crosslinking agent for the present composition and is an organopolysiloxane having at least two hydrogen atoms bonded to a silicon atom in each molecule thereof. Furthermore, examples of groups bonded to the silicon atom other than hydrogen atoms in component (B) include alkyl groups having 1 to 12 carbon atoms such as methyl groups, ethyl groups, propyl groups, butyl groups, pentyl groups, hexyl groups, heptyl groups, and the like; aryl groups having 6 to 12 carbon atoms such as phenyl groups, tolyl groups, xylyl groups, and the like; and aralkyl groups having 7 to 12 carbon atoms, such as benzyl groups, phenethyl groups, and the like, but methyl groups are preferable. Furthermore, component (B) may have small amounts of hydroxyl groups or alkoxy groups having 1 to 3 carbon atoms, such as methoxy groups and ethoxy groups, bonded to silicon atoms, so long as the object of the present invention is not impaired.

There are no limitations on the molecular structure of component (B), and examples include linear, partially branched, branched, cyclic, and resinous. Examples of this component (B) include dimethylpolysiloxanes capped at both molecular terminals with dimethylhydrogensiloxy groups, copolymers of dimethylsiloxane and methyl hydrogen siloxane capped at both molecular terminals with trimethylsiloxy groups, copolymers of dimethylsiloxane and methyl hydrogen siloxane copolymer capped at both molecular terminals with dimethylhydrogensiloxy groups,dimethylpolysiloxane capped at both molecular terminals with dimethylhydrogensiloxy groups, methylhydrogenpolysiloxane capped at both molecular terminals with trimethylsiloxy groups, cyclic methylhydrogenpolysiloxane, cyclic methylhydrogensiloxane-dimethylsiloxane copolymer, copolymers containing a siloxane unit expressed by the formula: H(CH₃)₂SiO_{1/2} and a siloxane unit expressed by the formula: SiO_{4/2}, copolymers containing a siloxane unit expressed by the formula: H(CH₃)₂SiO_{1/2} and a siloxane unit expressed by the formula:CH₃SiO_{3/2}, copolymers containing a siloxane unit expressed by the formula: H(CH₃)₂SiO_{1/2} and a siloxane unit expressed by the formula: C₆H₅SiO_{3/2}, copolymers containing a siloxane unit expressed by the formula: (CH₃)₃SiO_{1/2}, a siloxane unit expressed by the formula: H(CH₃)₂SiO_{1/2,} and a siloxane unit expressed by the formula: SiO_{4/2}, copolymers containing a siloxane unit expressed by the formula: (CH₃)₃SiO_{1/2}, a siloxane unit expressed by the formula: H(CH₃)₂SiO_{1/2,} and a siloxane unit expressed by the formula: CH₃SiO_{3/2}, and copolymers containing a siloxane unit expressed by the formula: (CH₃)₃SiO_{1/2}, a siloxane unit expressed by the formula: H(CH₃)₂SiO_{1/2,} and a siloxane unit expressed by the formula: C₆H₅SiO_{3/2}.

There are no particular limitations on the amount of component (B) in the composition, but preferably the amount is such that the amount of silicon-bonded hydrogen atoms in component (B) is within a range of 0.1 to 20 moles, 0.5 to 10 moles, 0.5 to 5 moles, or 0.7 to 3 moles per mole of alkenyl groups in component (A). This is because the present composition is satisfactorily cured if the content of the component (B) is not less than the lower limit of the above-mentioned range, and heat resistance of an obtained cured product is improved if the content of the component (B) is not more than the upper limit of the above-mentioned range.

The bis(alkynyloxysilyl)alkane of component (C) is as described above.

There are no particular limitations on the amount of component (C) contained in the composition, but the amount of this component is usually in a range of 10 to 5,000 ppm, 10 to 1,000 ppm, or 10 to 500 ppm by mass, relative to the combined amount of components (A) to (D). This is because if the amount of component (C) is equal to or greater than the lower limit of the above range, curing of the composition can be sufficiently suppressed, whereas, if the amount is equal to or less than the upper limit of the above range, the curability of the resulting composition is not impaired.

Component (D) is a hydrosilylation catalyst for accelerating the hydrosilylation reaction of the present composition. Examples of component (D) include platinum-based catalysts, palladium-based catalysts, and rhodium-based catalysts, and platinum-based catalysts are preferable. Examples of the platinum catalyst include chloroplatinic acid, chloroplatinic acid hexahydrate, platinum dichloride, alcohol-modified chloroplatinic acid, olefin complexes of platinum, carbonyl complexes of platinum, alkenylsiloxane complexes of platinum, diketone complexes of platinum; and high-energy ray-activated catalysts or light-activated catalysts such as (methylcyclopentadienyl)trimethylplatinum(IV), bis(2,4-pentanedionato)platinum(II), and bis(acetylacetonato)platinum(II). Furthermore, examples of alkenylsiloxanes in the alkenylsiloxane complex of platinum include 1,3-divinyltetramethyldisiloxane, 1,1,3,3-tetravinyldimethyl disiloxane, and methyl(3,3,3-trifluoropropyl)siloxane oligomers blocked with a dimethyvinylsiloxy group.

The amount of component (D) is a catalytic amount for promoting the hydrosilylation reaction of the composition; specifically an amount such that the catalytic metal in component (D) is in a range of 0.1 to 1000 ppm, 0.1 to 500 ppm, 5 to 500 ppm, 0.1 to 300 ppm, or 5 to 300 ppm, by mass, relative to the combined amount of components (A) through (D). This is because, if the amount of component (D) is equal to or higher than the lower limit of the above range, curing of the composition is promoted, whereas, if the amount is equal to or lower than the upper limit of the above range, problems such as discoloration of the obtained cured product are unlikely to occur.

The present composition may contain other optional components, such as organopolysiloxanes other than components (A) and (B), inorganic fillers, adhesion promoters, flame retardant agents, organic solvents, and the like, as long as the object of the present invention is achieved.

### EXAMPLES

The bis(alkynyloxysilyl)alkane of the present invention, production method thereof, and a curable silicone composition containing the same will now be described in further detail with reference to examples. Note that the present invention is not limited to these examples.

### Example 1

A 1000 mL four-neck flask equipped with a stirrer, a reflux condenser, a thermometer, and a drip funnel was purged with nitrogen, and then 2-methyl-3-butyn-2-ol (148.91 g, 1.770 mol), toluene (222 g), and 4-methylpyridine (243.69 g, 2.617 mol) were added. Next, 1,2-bis(trichlorosilyl)ethane (73.68 g, 0.248 mol) was added dropwise from the drip funnel over 30 minutes. The reaction was carried out at reflux temperature for 9 hours. Thereafter, methanol (7.921 g, 0.247 mol) was added by the drip funnel, and a reaction was further carried out at the reflux temperature. A large amount of water was added to the resulting reaction solution to dissolve the by-product salt, and then the organic layer was separated and washed five times with water. The low boiling point components were removed from the resulting organic layer by distillation under reduced pressure to obtain 89.41 g of a pale yellow liquid having a GC purity of 81.2%. It should be noted that the GC purity was calculated from the peak area of the main component in a GC analysis chart. Analysis of the pale yellow liquid by ¹³C-NMR and ²⁹Si-NMR revealed that the liquid was a mixture of 1-[tris(1,1-dimethyl-2-butynoxy)silyl-2-[bis(1,1-dimethyl-2-butynoxy)methoxysilyl]ethane expressed by the formula: 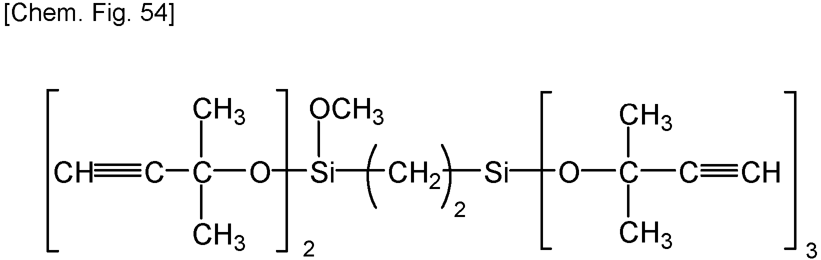 with a peak area ratio of 15% in the GC analysis chart, and 1,2-bis[tris(1,1-dimethyl-2-butynoxy)silyl]ethane expressed by the formula: 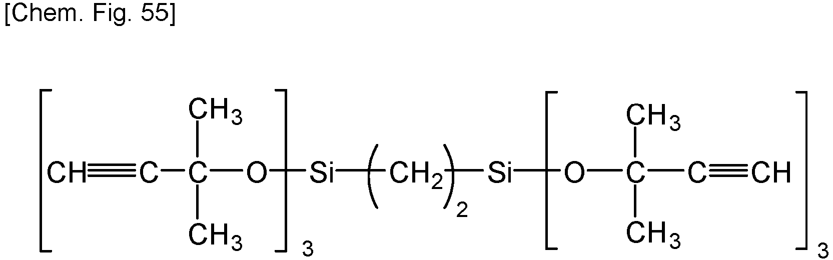 with a peak area ratio of 85% in the GC analysis chart. The boiling point of the mixture was 300°C or higher.

### Example 2

A 500 mL four-neck glass flask equipped with a stirrer, a reflux condenser, a thermometer, and a drip funnel was purged with nitrogen, and then 2-methyl-3-butyn-2-ol (62.96 g, 0.749 mol), toluene (100 g), and 4-methylpyridine (103.34 g, 1.110 mol) were added. Next, 1,6-bis(trichlorosilyl)hexane (37.58 g, 0.106 mol) was added dropwise from the drip funnel over 30 minutes. Thereafter, the mixture was reacted at the reflux temperature for 10 hours. Thereafter, methanol (3.569 g, 0.111 mol) was added by the drip funnel, and a reaction was further carried out at the reflux temperature. A large amount of water was added to the resulting reaction solution to dissolve the by-product salt, and then the organic layer was separated and washed five times with water. The low boiling point components were removed from the resulting organic layer by distillation under reduced pressure to obtain 39.06 g of a pale yellow liquid having a GC purity of 61.5%. It should be noted that the GC purity was calculated from the peak area of the main component in a GC analysis chart. Analysis of the pale yellow liquid by ¹³C-NMR and ²⁹Si-NMR revealed that the liquid was a mixture of 1-[tris(1,1-dimethyl-6-butynoxy)silyl-2-[bis(1,1-dimethyl-2-butynoxy)methoxysilyl]hexane expressed by the formula: 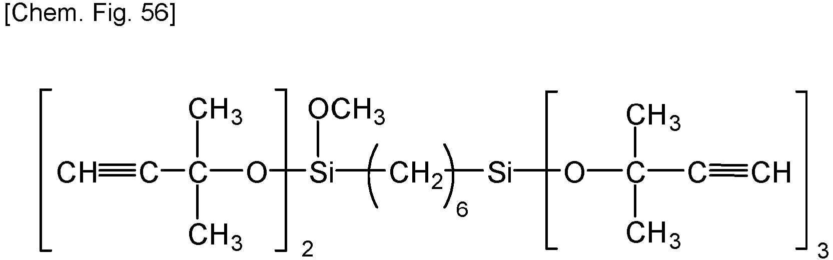 with a peak area ratio of 33% in the GC analysis chart, and 1,2-bis[tris(1,1-dimethyl-6-butynoxy)silyl]hexane expressed by the formula: 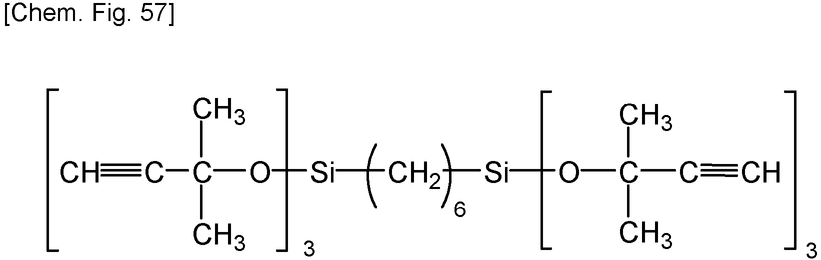 with a peak area ratio of 67% in the GC analysis chart.
The boiling point of the mixture was 300°C or higher.

### Example 3

A 100 mL four-neck glass flask equipped with a stirrer, a reflux condenser, a thermometer, and a drip funnel was purged with nitrogen, and then 2-methyl-3-butyn-2-ol (3.42 g, 0.041 mol), toluene (20 g), and diazabicycloundecene (8.80 g, 0.058 mol) were added and mixed for 10 minutes. Next, 1,6-bis(trichlorosilyl)hexane (2.00 g, 0.0057 mol) was added dropwise from the drip funnel over 30 minutes, and then the mixture was reacted at reflux temperature for 3 hours. A large amount of water was added to the resulting reaction solution to dissolve the by-product salt, and then the organic layer was separated and washed five times with water. The low boiling point components were removed from the resulting organic layer by distillation under reduced pressure to obtain 1.63 g of a pale yellow liquid having a GC purity of 85.6%. It should be noted that the GC purity was calculated from the peak area of the main component in a GC analysis chart. Analysis of the pale yellow liquid by ¹³C-NMR and ²⁹Si-NMR revealed that the liquid was a mixture of 1-[tris(1,1-dimethyl-6-butynoxy)silyl-2-[bis(1,1-dimethyl-2-butynoxy)hydroxysilyl]hexane expressed by the formula: 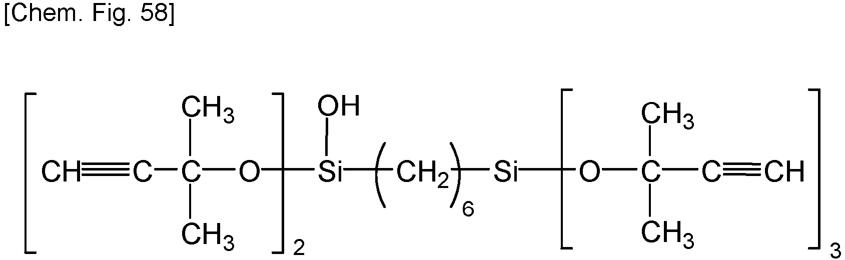 with a peak area ratio of 10% in the GC analysis chart, and 1,2-bis[tris(1,1-dimethyl-6-butynoxy)silyl]hexane expressed by the formula: 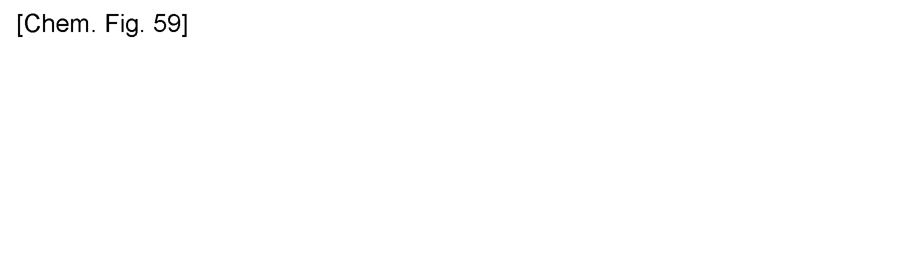 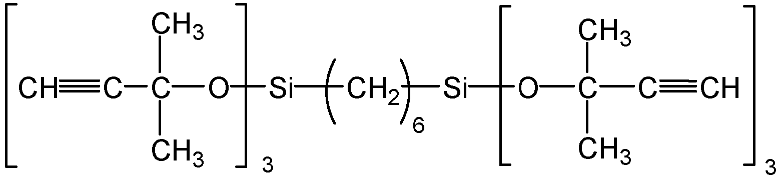 with a peak area ratio of 90% in the GC analysis chart.
The boiling point of the mixture was 300°C or higher.

### Example 4

A 1000 mL four-neck glass flask equipped with a stirrer, a reflux condenser, a thermometer, and a drip funnel was purged with nitrogen, and then 2-methyl-3-butyn-2-ol (118.00 g, 1.403 mol), toluene (201 g), and 4-methylpyridine (196.68 g, 2.112 mol) were added and stirred for 10 minutes. Next, 1,10-bis(trichlorosilyl)decane (83.06 g, 0.203 mol) was added dropwise from the drip funnel over 30 minutes. Thereafter, the mixture was reacted at the reflux temperature for 14 hours. Thereafter, methanol (6.342 g, 0.198 mol) was added by the drip funnel, and a reaction was further carried out at the reflux temperature. A large amount of water was added to the resulting reaction solution to dissolve the by-product salt, and then the organic layer was separated and washed five times with water. The low boiling point components were removed from the resulting organic layer by distillation under reduced pressure to obtain 88.57 g of a pale yellow liquid having a GC purity of 43.8%. It should be noted that the GC purity was calculated from the peak area of the main component in a GC analysis chart. Analysis of the pale yellow liquid by ¹³C-NMR and ²⁹Si-NMR revealed that the liquid was a mixture of 1-[tris(1,1-dimethyl-2-butynoxy)silyl-10-[bis(1,1-dimethyl-2-butynoxy)methoxysilyl]octane expressed by the formula: 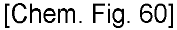 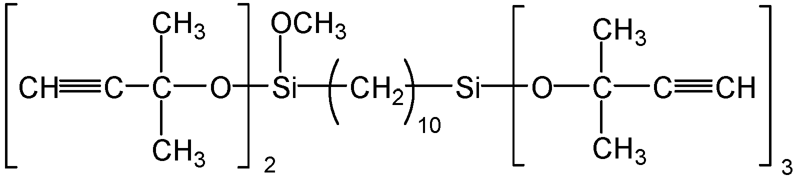 with a peak area ratio of 38% in the GC analysis chart, and 1,10-bis[tris(1,1-dimethyl-2-butynoxy)silyl]octane expressed by the formula: 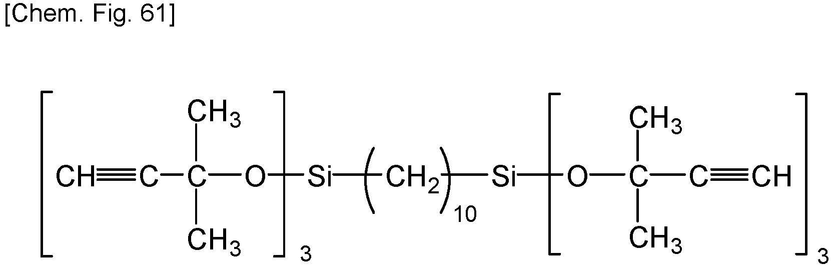 with a peak area ratio of 62% in the GC analysis chart.
The boiling point of the mixture was 300°C or higher.

### <Comparative Example 1>

A 1000 mL four-neck flask equipped with a stirrer, a reflux condenser, a thermometer, and a drip funnel was purged with nitrogen, and then 2-methyl-3-butyn-2-ol (130.50 g, 1.546 mol), toluene (204 g), and 4-methylpyridine (211.90 g, 2.275 mol) were added. Next, 1,6-bis(methyldichlorosilyl)hexane (7.03 g, 0.253 mol) was added dropwise from the drip funnel. Thereafter, the mixture was reacted at the reflux temperature for 8 hours. A large amount of water was added to the resulting reaction solution to dissolve the by-product salt, and then the organic layer was separated and washed five times with water. The low boiling point components were removed from the resulting organic layer by distillation under reduced pressure to obtain 92.74 g of a pale yellow liquid having a GC purity of 90.4%. It should be noted that the GC purity was calculated from the peak area of the main component in a GC analysis chart. The pale yellow liquid was analyzed by ¹³C-NMR and ²⁹Si-NMR and found to be 1,6-bis[bis(1,1-dimethyl-2-propynyloxy)methylsilyl]hexane expressed by the formula: 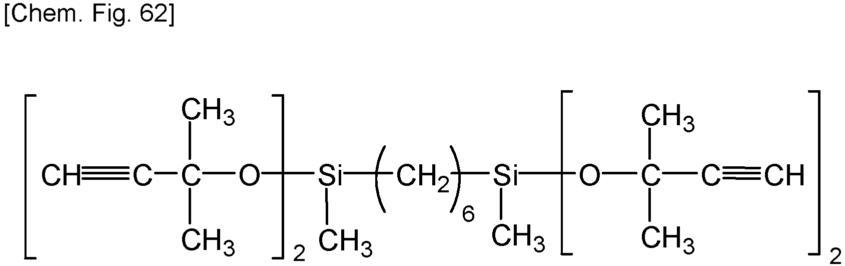 The boiling point was 300°C or higher.

### <Comparison of volatilization amount under hot forced air>

In order to confirm the volatility of the following samples under hot forced air, 1 g of each sample was weighed in an aluminum cup having a diameter of 5 cm, and dried in a hot air circulating oven under the conditions shown in Table 1, and the amount of volatilization (mass%) was measured. The results are shown in Table 1.
Sample 1: 1-ethynyl-cyclohexan-1-ol (boiling point = 174°C)
Sample 2: Tris[(1,1-dimethyl-2-propynyl)oxy]methylsilane (boiling point = 245°C)
Sample 3: Mixture prepared in Example 2 (boiling point = 300°C or higher)

**[Table 1]**

| | Drying conditions | Volatilization amount (mass%) |
|---|---|---|
| Sample 1 | 60°C, 2 hours | 100 |
| | 70°C, 2 hours | 100 |
| | 80°C, 2 hours | 100 |
| Sample 2 | 60°C, 2 hours | 87 |
| | 70°C, 2 hours | 100 |
| | 80°C, 2 hours | 100 |
| Sample 3 | 60°C, 2 hours | 0.26 |
| | 70°C, 2 hours | 0.32 |
| | 80°C, 2 hours | 0.35 |

From the results in Table 1, it was confirmed that the bis(alkynyloxysilyl)alkane of the present invention has a significantly lower volatility in a hot air circulating oven than existing hydrosilylation reaction inhibitors such as 1-ethynyl-cyclohexan-1-ol and tris[(1,1-dimethyl-2-propynyl)oxy]methylsilane, and therefore has a higher vapor pressure at room temperature.

### Examples 5 to 12 and Comparative Examples 2 to 5

A curable silicone composition was prepared according to the formulations shown in Table 2 and Table 3 using the following components.

The following organopolysiloxane was used as component (A).
(a1): Organopolysiloxane expressed by the average unit formula:

   [(CH₂=CH)(CH₃)₂SiO_{1/2]0.05}(CH₃)₃SiO_{1/2})_{0.39}(SiO_{4/2})_{0.56}(HO_{1/2})_{0.02}
(a2): Organopolysiloxane expressed by the formula:

   (CH₂=CH)(CH₃)₂SiO[(CH₃)₂SiO]₅₀₀SiO(CH₃)₂(CH=CH₂)
(a3): Organopolysiloxane expressed by the formula:

   (CH₂=CH)(CH₃)₂SiO[(CH₃)₂SiO]₈₀₀SiO(CH₃)₂(CH=CH₂)

The following organopolysiloxane was used as component (B).
(b1): Organopolysiloxane expressed by the average unit formula:

   [H(CH₃)₂)SiO_{1/2}]_{0.67}SiO4/2)0.33
(b2): Organopolysiloxane expressed by the formula:

   H(CH₃)₂SiO[(CH₃)₂SiO]₃₇[(CH₃)_{H}SiO]₃₇SiO(CH₃)₂H
(b3): Organopolysiloxane expressed by the average unit formula:

   (C₆H₅SiO_{3/2}]_{0.4}[HCH₃)₂SiO_{1/2})_{0.6}

The following compounds were used as component (C) and for comparison.
(c1): Tris[(1,1-dimethyl-2-propynyl)oxy]methylsilane
(c2): Mixture prepared in Example 1
(c3): Mixture prepared in Example 2
(c4): Mixture prepared in Example 3
(c5): Mixture prepared in Example 4
(c6): 1,6-bis[bis(1,1-dimethyl-2-propynyloxy)methylsilyl]hexane prepared in Comparative Example 1

The following catalysts were used as component (D).
(d1) 1,3-divinyltetramethyldisiloxane solution of a 1,3-divinyltetramethyldisiloxane complex of platinum (0 valence)
(d2): Bis(acetylacetonato)platinum(II)

The other components used were as follows.
(e1): Organopolysiloxane which is a white solid at room temperature and is represented by the average unit formula:

   [(CH₃)₃SiO_{1/2}]_{0.44}(SiO_{4/2})_{0.56}(HO_{1/2})_{0.02}
(f1): Condensation reaction product of methylvinylsiloxane oligomer capped with silanol groups at both molecular chain ends and 3-glycidoxypropyltrimethoxysilane
(g1): Toluene

### <Curing characteristics>

The curable silicone composition was vulcanized for 600 seconds at a prescribed temperature using a vulcanization tester (product name: PREMIER MDR manufactured by Alpha Technologies) in accordance with a method specified in JIS K 6300-2:2001 "Unvulcanized Rubber - Physical Properties - Part 2: Determination of Vulcanization Characteristics Using a Vibratory Vulcanization Tester" to measure the curing properties. Measurements were performed at 150°C for the examples shown in Table 2, and at 100°C for the compositions shown in Table 3. Furthermore, UV light with a wavelength of 365 nm was irradiated at a dose of 10 J/cm² before measuring the compositions of Table 3. In addition, for the compositions described in Table 2, the obtained liquid composition was spread thinly on a PET film and dried for 1 hour in a hot air circulating oven set at 70°C, and then the curing property was measured again at 150°C to evaluate the stability of the curing retarder. Note that for the measurement, a mass of the curable hot-melt silicone composition was weighed out at approximately 5 g, sandwiched between 50 µm-thick PET films, then placed on a lower die, after which measurement was initiated once the upper die had closed. It should be noted that the measurements were made using an R-type die for rubber, with an amplitude angle of 0.53°, a vibration frequency of 100 times/minute, and a maximum torque range of 230 kgf·cm. As measurement results, the time (TS-1) required for the torque value to exceed 1 dNm was read in seconds for the compositions in Table 2, and the time (TS-2) required for the torque value to exceed 2 dNm was read in seconds for the compositions in Table 3, since the minimum torque did not fall below 1 dNm.

### <Adhesive strength>

Approximately 500 mg of the curable silicone composition shown in Table 2 was placed at each of four locations on a 25 mm x 75 mm aluminum plate. Next, this composition was covered with a 10 mm square glass chip having a thickness of 1 mm, and was heated at a temperature of 150°C for 1 hour for curing. Thereafter, the mixture was cooled to room temperature and the die shear strength (adhesive strength) was determined using a shear strength determination apparatus (bond tester-SS-100KP, available from Seishin Trading Co., Ltd.)

### <Haze of the cured product>

The curable silicone compositions in Table 3 were irradiated with ultraviolet light having a wavelength of 365 nm so that the exposure dose was 4 J/cm², and then cured at 100°C for 1 hour to obtain a film having a thickness of 200 µm. The haze value of the obtained cured film was measured using a spectrophotometer CM-5 (manufactured by Konica Minolta).

### <Preparation of Curable Silicone Composition (1)>

The components were weighed in the amounts shown in Table 2 and stirred in a dental mixer to obtain a curable silicone composition that was liquid at room temperature. Furthermore, Table 2 also shows the initial curing properties of each composition, the curing properties after exposure to 70°C in a thin film, and the adhesive strength of the cured product.

**[Table 2]**

| | | | EXAMPLES | | | | Comparative Examples | | |
|---|---|---|---|---|---|---|---|---|---|
| | | | 5 | 6 | 7 | 8 | 2 | 3 | 4 |
| Composition of curable silicone composition (parts by mass) | (A) | (a1) | 42.6 | 42.6 | 42.6 | 42.6 | 42.6 | 42.6 | 42.6 |
| | | (a2) | 52 | 52 | 52 | 52 | 52 | 52 | 52 |
| | (B) | (b1) | 2.1 | 2.1 | 2.1 | 2.1 | 2.1 | 2.1 | 2.1 |
| | | (b2) | 3.4 | 3.4 | 3.4 | 3.4 | 3.4 | 3.4 | 3.4 |
| | (C) | (c1) | 0 | 0 | 0 | 0 | 0 | 0.05 | 0.03 |
| | | (c2) | 0.05 | 0 | 0 | 0 | 0 | 0 | 0 |
| | | (c3) | 0 | 0.05 | 0 | 0 | 0 | 0 | 0 |
| | | (c4) | 0 | 0 | 0.05 | 0 | 0 | 0 | 0 |
| | | (c5) | 0 | 0 | 0 | 0.05 | 0 | 0 | 0 |
| | | (c6) | 0 | 0 | 0 | 0 | 0.05 | 0 | 0 |
| | (D) | (d1) | An amount where the amount of platinum atoms in the composition is 6 ppm by mass | | | | | | |
| TS-1 (seconds) | Initial | | 67 | 53 | 56 | 49 | 30 | 115 | 42 |
| | After exposure to thin film at 70°C for 1 hr. | | 30 | 50 | 53 | 45 | 35 | 34 | Cured |
| Adhesive strength (Mpa) | | | 5.7 | 6.1 | 5.1 | 6.3 | 4.1 | 3.9 | 4.2 |

The results in Table 2 demonstrate that the curable silicone composition of the present invention does not lose curing retardation effect even when exposed to a constant amount of hot air while in the form of a thin film. Furthermore, the curable silicone composition of the present invention was found to have superior adhesion to the comparative examples, and provides a cured product by curing. These results demonstrate that the bis(alkynyloxysilyl)alkanes of the present invention can be used not only as a hydrosilylation reaction inhibitor, but also as an adhesion promoter that improves the adhesive strength of a curable silicone composition.

### <Preparation of Curable Silicone Composition (2)>

The components were weighed out in the amounts shown in Table 3 and stirred using a Three-One Motor to obtain a uniform, liquid curable silicone composition. A film coated with a fluorosilicone release agent (FSC-6, manufactured by Nippa Corporation) was coated with the liquid composition immediately after preparation to a thickness of 120 µm or 300 µm, and then dried for 5 minutes in a hot air circulating oven set at 70°C to remove the toluene, yielding a film-like curable silicone composition with a thickness of 100 µm or 200 µm. The same release film (FSC-6, manufactured by Nippa Corporation) was then placed over the obtained film composition and laminated with a roller to produce a three-layer laminate body containing a release film-film curable silicone composition-release film. It should be noted that all of the film compositions shown in Table 3 were able to be reprocessed, including adjusting the thickness, by heating to 100°C, and therefore retained the hot-melt properties. Table 3 shows the initial curing properties of each composition, storage stability at 50°C, and haze value of the cured product made of each composition.

**[Table 3]**

| | | | EXAMPLES | | | | Comparative Examples |
|---|---|---|---|---|---|---|---|
| | | | 9 | 10 | 11 | 12 | 5 |
| Composition of curable silicone composition (parts by mass) | (A) | (a1) | 10.2 | 10.2 | 10.2 | 10.2 | 10.2 |
| | | (a2) | 30.1 | 30.1 | 30.1 | 30.1 | 30.1 |
| | (B) | (b1) | 1.5 | 1.5 | 1.5 | 1.5 | 1.5 |
| | (C) | (c1) | 0 | 0 | 0 | 0 | 0.045 |
| | | (c2) | 0.045 | 0 | 0 | 0 | 0 |
| | | (c3) | 0 | 0.045 | 0 | 0 | 0 |
| | | (c4) | 0 | 0 | 0.045 | 0 | 0 |
| | | (c5) | 0 | 0 | 0 | 0.045 | 0 |
| | (D) | (d2) | An amount where the amount of platinum atoms in the composition is 16 ppm by mass | | | | |
| | (E) | (e1) | 55.7 | 55.7 | 55.7 | 55.7 | 55.7 |
| | (F) | (f1) | 0.3 | 0.3 | 0.3 | 0.3 | 0.3 |
| | (G) | (g1) | 17 | 17 | 17 | 17 | 17 |
| TS-2 (seconds) | | | 283 | 153 | 70 | 165 | 98 |
| Gel time at 50°C (days) | | | 25 | 25 | 65 | 28 | 14 |
| Haze of cured product (T = 200 µm, %) | | | 0.83 | 0.27 | 0.40 | 0.20 | 0.21 |

The results in Table 3 show that if the curable silicone composition contains a general hydrosilylation reaction inhibitor (Comparative Example 5) and preparation of the curable silicone composition involves a process of removing the diluent solvent by hot air, a portion or all of the hydrosilylation reaction inhibitor volatilizes so maintaining storage stability of the obtained curable silicone composition will be difficult. However, the curable silicone composition of the present invention containing a bis(alkynyloxysilyl)alkane (Examples 9 to 12) will exhibit excellent storage stability. Furthermore, a comparison of Example 9 with Examples 10 to 12 demonstrates that the transparency of the curable silicone composition can be improved more effectively by using component (c3) having a hexylene skeleton, or components (c4) and (c5) having a decylene skeleton, than by using component (c2) having an ethylene skeleton.

### INDUSTRIAL APPLICABILITY

The bis(alkynyloxysilyl)alkane of the present invention has alkynyloxysilyl groups at both ends of the alkane, and also has an alkoxy group or a hydroxyl group (silanol group) bonded to a silicon atom, and has a high boiling point, low vapor pressure at room temperature, and excellent affinity for curable silicone compositions. Therefore the compound is useful as a hydrosilylation reaction inhibitor for hydrosilylation reaction-curing type curable silicone compositions.

## Claims

1. A bis(alkynyloxysilyl)alkane expressed by the general formula: 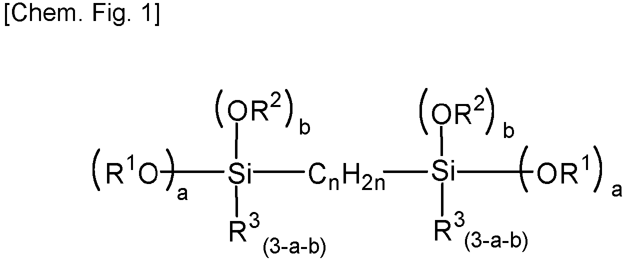 (where R¹ independently represents an alkynyl group having 5 to 12 carbon atoms, R² independently represents an alkyl group having 1 to 3 carbon atoms or a hydrogen atom, R³ independently represents an alkyl group having 1 to 3 carbon atoms, "a" independently represents 1, 2, or 3, and "b" independently represents 0, 1, or 2, but at least one b is 1 or 2, and "a + b" is 2 or 3, and "n" represents an integer from 2 to 20).

2. The bis(alkynyloxysilyl)alkane according to claim 1, wherein in the formula, R¹ is an alkynyl group expressed by the formula: 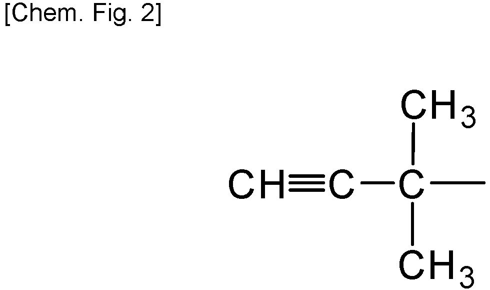 an alkynyl group expressed by the formula: 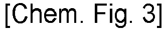 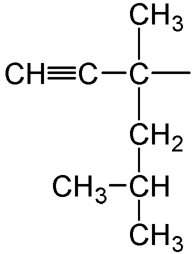 or an alkynyl group expressed by the formula:

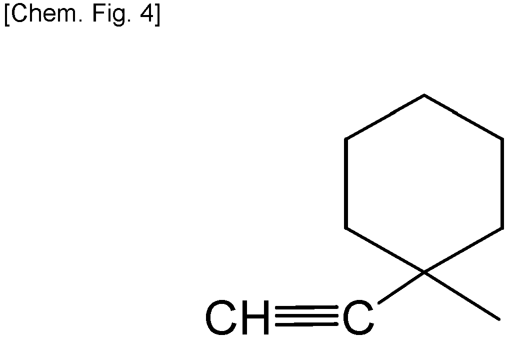

3. A production method for the bis(alkynyloxysilyl)alkane according to Claim 1, comprising:
performing a dehalogenation hydrogen condensation reaction of a bis(halosilyl)alkane expressed by general formula: 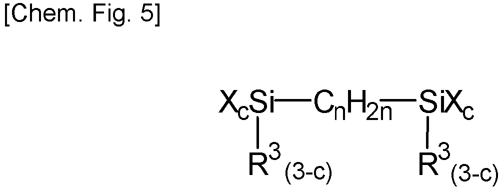
(where, R³ is independently an alkyl group having 1 to 3 carbon atoms, X is independently a halogen atom, c is independently 2 or 3, and n is an integer of 2 to 20.), and
an alkynyl alcohol expressed by the formula: R¹OH (where, R¹ is an alkynyl group having 5 to 12 carbon atoms.), and then reacting the resulting partial condensation reaction product with water or an alkyl alcohol having 1 to 3 carbon atoms.

4. The production method according to Claim 3, wherein
the alkynyl alcohol is
an alkynyl alcohol expressed by the formula: 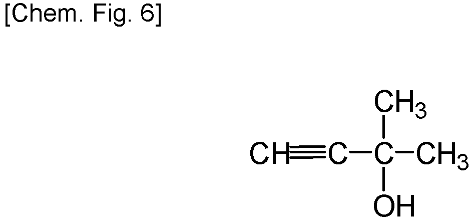
an alkynyl alcohol expressed by the formula: 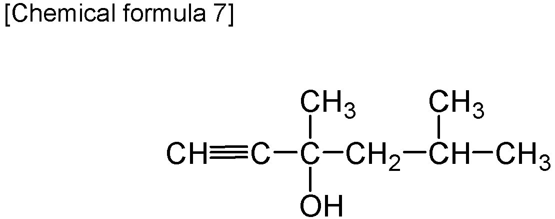
or an alkynyl alcohol expressed by the formula:

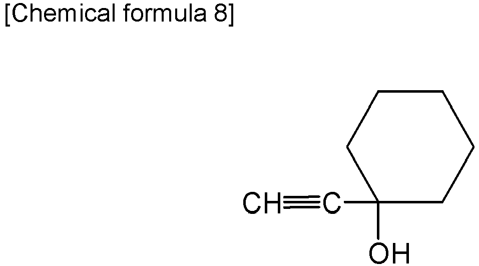

5. The production method according to claim 3, wherein the dehydrohalogenation condensation reaction is performed in the presence of a hydrogen halide scavenger.

6. The production method according to claim 5, wherein the hydrogen halide scavenger is triethylamine, pyridine, picoline, or diazabicycloundecene.

7. The bis(alkynyloxysilyl)alkane according to claim 1 or claim 2, which is an inhibitor of a hydrosilylation reaction.

8. A hydrosilylation reaction curable silicone composition, comprising the bis(alkynyloxysilyl)alkane according to claim 1 or 2.

9. A curable silicone composition, comprising at least one of:
(A) an organopolysiloxane having at least two alkenyl groups in one molecule;
(B) an organohydrogenpolysiloxane having at least two silicon-bonded hydrogen atoms in each molecule;
(C) the bis(alkynyloxysilyl)alkane according to claim 1 or 2; and
(D) a hydrosilylation reaction catalyst.
